# EUROPEAN PATENT APPLICATION

(11) **EP 4 734 426 A1**
(43) Date of publication of application: **29.04.2026**
(21) Application number: 24825256.1
(22) Date of filing: 19.06.2024
(51) Int. Cl.: H04L 5/00

(54) **METHOD AND APPARATUS USED IN NODE FOR WIRELESS COMMUNICATION**

(30) Priority: 20.06.2023 CN 202310737479
(71) Applicant: Apogee Networks, LLC, Plano, TX 75024 (US)
(72) Inventor: LIU, Zheng, Shanghai 201206 (CN); ZHANG, Xiaobo, Shanghai 201206 (CN)
(74) Representative: Gunzelmann, Rainer
(86) International application number: PCT/CN2024/100031
(87) International publication number: WO 2024/260362

(57) **Abstract**

The present application discloses a method and apparatus used in a node for wireless communication. A node receives a first information block and receives first DCI signaling and a first signal; the first DCI signaling indicates a time-frequency resource occupied by the first signal; a time offset value between the first DCI signaling and the first signal in a time domain is smaller than a first threshold; the first signal and a target control resource set are quasi-co-located; the first threshold depends on the capability of a first node device; the symbol type of at least one symbol occupied in the time domain by a search space associated with the target control resource set is the same as the symbol type of at least one symbol occupied in the time domain by the first signal; and the symbol type of at least one symbol indicated as a downlink by a TDD up-link/downlink configuration depends on the first information block. The present application improves the receiving quality.

## Description

### Technical Field

The present application relates to a transmission method and apparatus in a wireless communication system, and in particular to a transmission scheme and apparatus for flexible transmission direction configuration in wireless communication.

### Background Art

Application scenarios of wireless communication systems in future will become more and more diversified, and different application scenarios will put forward different performance requirements for the systems. In order to meet the different performance requirements of various application scenarios, the 3GPP (3rd Generation Partner Project) RAN (Radio Access Network) #72 plenary meeting decided to study the new radio (NR) technology (or 5G), a WI (Work Item) of the new radio (NR) technology was passed at the 3GPP RAN #75 plenary meeting, and standardization work on NR was started. It was decided at the 3GPP RAN #86 plenary meeting to start work on an SI (Study Item) and a WI (Work Item) of NR Rel-17, and it is expected that the SI and the WI of NR Rel-18 will be established at the 3GPP RAN #94e plenary meeting.

In the new radio technology, enhanced Mobile BroadBand (eMBB), Ultra-reliable and Low Latency Communications (URLLC), and massive Machine Type Communications (mMTC) are three main application scenarios.

### Summary of the Invention

In an existing NR system, spectrum resources are statically divided into a FDD spectrum and a TDD spectrum. For the TDD spectrum, a base station and user equipment both work in a half-duplex mode. This half-duplex mode avoids self-interference and can alleviate the impact of a cross-link interference, but it also brings about a decrease in a resource utilization rate and an increase in delay. In view of these problems, supporting a flexible duplex mode on the TDD spectrum or the FDD spectrum has become a possible solution.

In view of the problem of determining a beam or a corresponding TCI state in supporting a flexible duplex mode, the present application discloses a solution. It should be explained that in the description of the present application, the flexible duplex mode is only used as a typical application scenario or example; and the present application is also applicable to other scenarios facing similar problems (for example, scenarios where link direction changes occur, or other scenarios supporting multi-level configuration of transmission directions, or base stations or user equipment with stronger capabilities, such as scenarios supporting same-frequency full-duplex, or for different application scenarios, such as eMBB and URLLC, and similar technical effects can also be achieved. In addition, the present application can also solve the problem of determining parameters other than the beam or the TCI state, such as default power parameters and default scheduling parameters. The use of a unified solution for different scenarios (including but not limited to eMBB and URLLC scenarios) or different application parameters also facilitates the reduction of hardware complexity and costs. In case of no conflicts, embodiments and features in the embodiments in a first node device of the present application can be applied to a second node device, and vice versa. Particularly, interpretations of terminologies, nouns, functions, and variables in the present application (if not otherwise specified) can refer to definitions in 3GPP specification protocol TS38 series and TS37 series.

The present application discloses a method used in a first node for wireless communication, characterized by comprising:
receiving a first information block;
and receiving first DCI signaling and receiving a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of a first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

As one embodiment, restricting a symbol type of the search space associated with the target control resource set to be the same as a symbol type of the first signal avoids inconsistency of Quasi-co-location (QCL) caused by configurations of different types of symbols (such as SBFD symbols and non-SBFD symbols), ensuring correct reception of the first signal.

According to an aspect of the present application, the above method is characterized in that, the target control resource set and the first signal belong to a same cell, and the target control resource set is a control resource set with a minimum index value that is monitored in a latest symbol of the same symbol type as at least one time domain symbol occupied in the time domain by the first signal.

According to an aspect of the present application, the above method is characterized in that, the first signal and a reference signal for a TCI state among a plurality of TCI states of the target control resource set are quasi-co-located, the TCI state being associated with the symbol type of the at least one time domain symbol occupied in the time domain by the first signal.

According to an aspect of the present application, the above method is characterized by comprising:
sending a second information block,
wherein the second information block indicates a first capability parameter value, and the first threshold depends on the first capability parameter value and a target offset value; and the target offset value depends on at least one of the first information block or the second information block.

According to an aspect of the present application, the above method is characterized in that, an index value of a control resource set pool to which the target control resource set belongs is equal to an index value of a control resource set pool to which a PDCCH carrying the first DCI signaling belongs.

According to an aspect of the present application, the above method is characterized by comprising:
receiving a third information block,
wherein the third information block indicates a same reference signal for quasi-co-location of a demodulation reference signal for a physical downlink shared channel, a demodulation reference signal for a physical downlink control channel, and a channel status information reference signal; and a PCI associated with a TCI state with which the first signal is configured is different from a PCI of a serving cell to which the first signal belongs.

According to an aspect of the present application, the above method is characterized in that, the first information block indicates a first subband, and the first subband comprises at least one resource block; the first information block indicates a symbol type of at least 1 symbol from a periodic time window, the periodic time window comprises a plurality of consecutive symbols, and a time length of the periodic time window is related to a slot format configuration period length; and a first type is a symbol type of at least 1 symbol indicated by the first information block from the periodic time window, and a symbol indicated as a downlink by a TDD uplink/downlink configuration and overlapping with a symbol of the first type is used for uplink transmission in the first subband.

The present application discloses a method used in a second node for wireless communication, characterized by comprising:
sending a first information block;
and sending first DCI signaling and sending a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of a first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

According to an aspect of the present application, the above method is characterized in that, the target control resource set and the first signal belong to a same cell, and the target control resource set is a control resource set with a minimum index value that is monitored in a latest symbol of the same symbol type as at least one time domain symbol occupied in the time domain by the first signal.

According to an aspect of the present application, the above method is characterized in that, the first signal and a reference signal for a TCI state among a plurality of TCI states of the target control resource set are quasi-co-located, the TCI state being associated with the symbol type of the at least one time domain symbol occupied in the time domain by the first signal.

According to an aspect of the present application, the above method is characterized by comprising:
receiving a second information block,
wherein the second information block indicates a first capability parameter value, and the first threshold depends on the first capability parameter value and a target offset value; and the target offset value depends on at least one of the first information block or the second information block.

According to an aspect of the present application, the above method is characterized in that, an index value of a control resource set pool to which the target control resource set belongs is equal to an index value of a control resource set pool to which a PDCCH carrying the first DCI signaling belongs.

According to an aspect of the present application, the above method is characterized by comprising:
sending a third information block,
wherein the third information block indicates a same reference signal for quasi-co-location of a demodulation reference signal for a physical downlink shared channel, a demodulation reference signal for a physical downlink control channel, and a channel status information reference signal; and a PCI associated with a TCI state with which the first signal is configured is different from a PCI of a serving cell to which the first signal belongs.

According to an aspect of the present application, the above method is characterized in that, the first information block indicates a first subband, and the first subband comprises at least one resource block; the first information block indicates a symbol type of at least 1 symbol from a periodic time window, the periodic time window comprises a plurality of consecutive symbols, and a time length of the periodic time window is related to a slot format configuration period length; and a first type is a symbol type of at least 1 symbol indicated by the first information block from the periodic time window, and a symbol indicated as a downlink by a TDD uplink/downlink configuration and overlapping with a symbol of the first type is used for uplink transmission in the first subband.

The present application discloses a first node device for wireless communication, characterized by comprising:
a first transceiver receiving a first information block;
and a first receiver receiving first DCI signaling and receiving a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

The present application discloses a second node device for wireless communication, characterized by comprising:
a second transceiver sending a first information block;
and a first transmitter sending first DCI signaling and sending a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of a first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

### Brief Description of the Drawings

Other features, purposes and advantages of the present application will become more apparent by reading the detailed description of non-limiting embodiments in the following drawings with reference to them:
FIG. 1 shows a flowchart of a first information block, first DCI signaling, and a first signal according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first node device and a second node device according to one embodiment of the present application;
FIG. 5 shows a flowchart of wireless signal transmission according to one embodiment of the present application;
FIG. 6 shows a schematic diagram of a target control resource set according to one embodiment of the present application;
FIG. 7 shows a schematic diagram of a first signal according to one embodiment of the present application;
FIG. 8 shows a schematic diagram of a target offset value according to one embodiment of the present application;
FIG. 9 shows a schematic diagram of a control resource set pool according to one embodiment of the present application;
FIG. 10 shows a schematic diagram of a relationship between a serving cell associated with a TCI state with which a first signal is configured and a serving cell to which the first signal belongs according to one embodiment of the present application;
FIG. 11 shows a schematic diagram of a periodic time window according to one embodiment of the present application;
FIG. 12 shows a structural block diagram of a processing apparatus in a first node device according to one embodiment of the present application;
and FIG. 13 shows a structural block diagram of a processing apparatus in a second node device according to one embodiment of the present application.

### Detailed Description of Embodiments

The technical solution of the present application will be further described in detail below in conjunction with the drawings. It should be noted that, in case of no conflicts, embodiments and features in the embodiments of the present application can be arbitrarily combined with each other.

### Embodiment 1

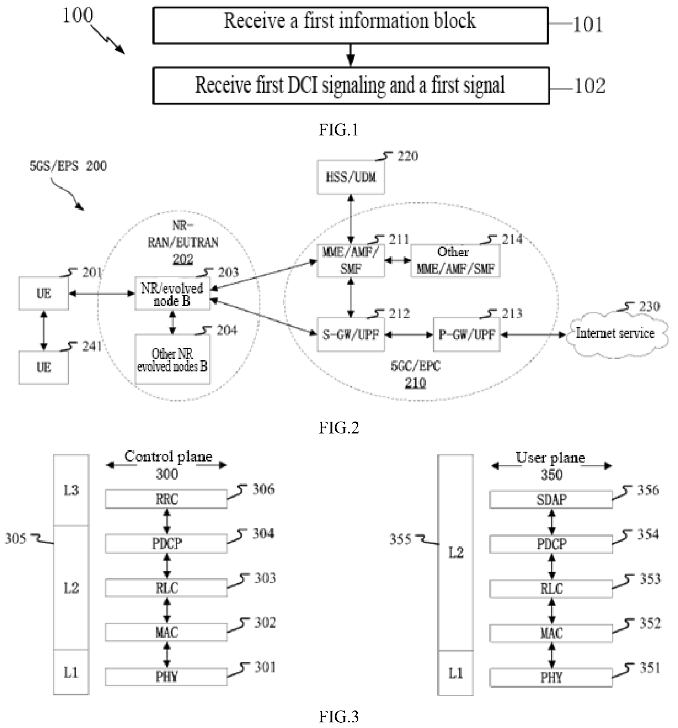

Embodiment 1 illustrates a flowchart 100 of a first information block, first DCI signaling, and a first signal according to one embodiment of the present application, as shown in FIG. 1. In FIG. 1, each block represents one step. It is particularly needed to emphasize that the order of various blocks in the figure does not limit a temporal sequential relationship of the steps represented.

In Embodiment 1, a first node device in the present application receives the first information block in step 101; and the first node device in the present application receives the first DCI signaling and receives the first signal in step 102, the first DCI signaling indicating a time-frequency resource occupied by the first signal, wherein a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

As one embodiment, restricting a symbol type of the search space associated with the target control resource set to be the same as a symbol type of the first signal avoids inconsistency of Quasi-co-location (QCL) caused by configurations of different types of symbols (such as SBFD symbols and non-SBFD symbols), ensuring correct reception of the first signal.

As one embodiment, the first information block comprises high-layer information or a high-layer parameter configuration.

As one embodiment, the first information block comprises one or more IEs (Information Elements) comprised in one piece of RRC (Radio Resource Control) layer signaling, or the first information block comprises one or more fields comprised in one piece of RRC layer signaling. As one subsidiary embodiment of the above embodiment, the first information block comprises RRC, which can reduce signaling overhead.

As one embodiment, the first information block comprises part of or all fields comprised in one SIB.

As one embodiment, the first information block is Cell Common, or the first information block is Cell specific.

As one embodiment, the first information block is Group Common.

As one embodiment, the first information block is UE specific or UE dedicated.

As one embodiment, the first information block is configured per subband.

As one embodiment, the first information block is configured per carrier. As one subsidiary embodiment of the above embodiment, SBFD is configured per carrier to reduce complexity.

As one embodiment, the first information block is configured per bandwidth part (BWP). As one subsidiary embodiment of the above embodiment, SBFD is configured per BWP, which can reuse an existing design and reduce standardization work.

As one embodiment, the first information block comprises part of or all fields in IE "SBFDConfigDedicated".

As one embodiment, the first information block comprises part of or all fields in IE "SBFDConfigCommon".

As one embodiment, the first information block comprises part of or all fields in IE "SBFDConfig".

As one embodiment, the first information block comprises part of or all fields in IE "ServingCellConfigCommon".

As one embodiment, the first information block comprises part of or all fields in IE "CellGroupConfig".

As one embodiment, the first information block comprises part of or all fields in IE "SpCellConfig".

As one embodiment, the first information block comprises part of or all fields in IE "SCellConfig".

As one embodiment, the first information block comprises part of or all fields in IE "ServingCellConfigCommonSIB".

As one embodiment, the first information block comprises part of or all fields in IE "ServingCellConfig".

As one embodiment, the first information block comprises part of or all fields in a DCI (downlink control information) format 2_N, N being one non-negative integer.

As one embodiment, the first information block comprises part of or all fields in a DCI format 2_9.

As one embodiment, the first information block comprises part of or all fields in one DCI format. As one subsidiary embodiment of the above embodiment, the first information block comprises DCI, which can provide greater flexibility.

As one embodiment, the first information block is transmitted on a PDCCH (physical downlink control channel).

As one embodiment, the first information block configures a slot or symbol of SBFD (Subband non-overlapping Full Duplex).

As one embodiment, the first information block configures at least one of an uplink subband (UL subband), a downlink subband (DL subband), or a guardband of SBFD.

As one embodiment, the first information block configures a slot or symbol supporting full duplex.

As one embodiment, the first DCI signaling is transmitted through a PDCCH.

As one embodiment, the first DCI signaling is mapped onto a PDCCH for transmission.

As one embodiment, the first DCI signaling comprises all or part of fields in one DCI format.

As one embodiment, the first DCI signaling comprises all or part of information bits or payload in one DCI format.

As one embodiment, a DCI format adopted by the first DCI signaling is one of DCI formats 1_0, 1_1, 1_2, or 1_3. As one subsidiary embodiment of the above embodiment, all existing DCI formats for scheduling downlink unicast are supported, ensuring backward compatibility and improving flexibility.

As one embodiment, the DCI format adopted by the first DCI signaling is one of DCI formats 1_0, 1_1, 1_2, 1_3, 4_1, or 4_2. As one subsidiary embodiment of the above embodiment, DCI formats for scheduling multicast are supported, thereby supporting multicast transmission under SBFD.

As one embodiment, the DCI format adopted by the first DCI signaling is one of DCI formats 1_0, 1_1, 1_2, 1_3, 4_0, 4_1, or 4_2. As one subsidiary embodiment of the above embodiment, DCI formats for scheduling broadcast and multicast are supported, thereby supporting broadcast and multicast transmission under SBFD.

As one embodiment, the DCI format adopted by the first DCI signaling is one of DCI formats 1_1, 1_2, or 1_3. As one subsidiary embodiment of the above embodiment, only part of DCI formats for scheduling downlink are supported, reducing complexity and simplifying a design.

As one embodiment, the DCI format adopted by the first DCI signaling is one of DCI formats 1_1 or 1_2. As one subsidiary embodiment of the above embodiment, only a DCI format for single-cell scheduling is supported, avoiding QCL misalignment of multi-cell scheduling and reducing complexity.

As one embodiment, the DCI format adopted by the first DCI signaling is one of DCI formats 1_0, 1_1, 1_2, 1_3, and 1_4. As one subsidiary embodiment of the above embodiment, a newly introduced DCI format is supported, providing forward compatibility.

As one embodiment, the DCI format adopted by the first DCI signaling is one of DCI formats 1_1, 1_2 or 1_4. As one subsidiary embodiment of the above embodiment, a newly introduced DCI format is supported, providing forward compatibility, and meanwhile avoiding a QCL misalignment problem of multi-cell scheduling.

As one embodiment, the DCI format adopted by the first DCI signaling is a DCI format for scheduling a PDSCH (physical downlink shared channel).

As one embodiment, the DCI format adopted by the first DCI signaling is one of DCI formats 0_0, 0_1, 0_2, or 0_3. As one subsidiary embodiment of the above embodiment, all existing DCI formats for scheduling uplinks are supported, ensuring backward compatibility and improving flexibility.

As one embodiment, the DCI format adopted by the first DCI signaling is one of DCI formats 0_1, 0_2 or 0_3. As one subsidiary embodiment of the above embodiment, only part of DCI formats for scheduling uplink are supported, reducing complexity and simplifying a design.

As one embodiment, the DCI format adopted by the first DCI signaling is one of DCI formats 0_1 or 0_2. As one subsidiary embodiment of the above embodiment, only a DCI format for single-cell scheduling is supported, avoiding QCL misalignment of multi-cell scheduling and reducing complexity.

As one embodiment, the DCI format adopted by the first DCI signaling is one of DCI formats 0_0, 0_1, 0_2, 0_3, and 0_4. As one subsidiary embodiment of the above embodiment, a newly introduced DCI format is supported, providing forward compatibility.

As one embodiment, the DCI format adopted by the first DCI signaling is one of DCI formats 0_1, 0_2 or 0_4. As one subsidiary embodiment of the above embodiment, a newly introduced DCI format is supported, providing forward compatibility, and meanwhile avoiding a QCL misalignment problem of multi-cell scheduling.

As one embodiment, the DCI format adopted by the first DCI signaling is a DCI format for triggering an aperiodic CSI-RS (channel status information reference signal).

As one embodiment, the DCI format adopted by the first DCI signaling is a DCI format carrying a CSI request.

As one embodiment, the DCI format adopted by the first DCI signaling is one of a plurality of candidate DCI formats, and the plurality of candidate DCI formats are predefined or are configured. As one subsidiary embodiment of the above embodiment, benefits of doing so are to avoid increasing complexity as much as possible while improving flexibility, and also to avoid impact on scheduling of at least 1 existing DCI format, simplifying a design. As one subsidiary embodiment of the above embodiment, the plurality of candidate DCI formats only comprise DCI formats supporting scheduling across symbol types. As one subsidiary embodiment of the above embodiment, the plurality of candidate DCI formats only comprise DCI formats supporting SBFD. As one subsidiary embodiment of the above embodiment, any one of the plurality of candidate DCI formats supports scheduling between an SBFD symbol and a non-SBFD symbol. As one subsidiary embodiment of the above embodiment, user equipment does not expect that a symbol type occupied in the time domain by one DCI format other than the plurality of candidate DCI formats is different from a symbol type occupied in the time domain by a scheduled channel or signal.

As one embodiment, the DCI format adopted by the first DCI signaling only comprises a DCI format supporting scheduling in SBFD.

As one embodiment, a CRC of the first DCI signaling is scrambled by a C-RNTI (Cell Radio Network Temporary Identifier) or a CS-RNTI or an MCS-C-RNTI.

As one embodiment, the CRC of the first DCI signaling is scrambled by the C-RNTI or the CS-RNTI (Configured Scheduling RNTI) or the MCS-C-RNTI (modulation coding scheme C-RNTI) or an SP-CSI-RNTI (semi-persistent channel status information RNTI).

As one embodiment, the CRC of the first DCI signaling is scrambled by the C-RNTI (Cell Radio Network Temporary Identifier) or the CS-RNTI or the MCS-C-RNTI or a G-RNTI (Group RNTI) or a G-CS-RNTI.

As one embodiment, a PDCCH to which the first DCI signaling is mapped belongs to a UE-specific Search Space set (USS set). As one subsidiary embodiment of the above embodiment, the benefits of doing so are to reduce complexity and ensure not to affect the performance of an old version.

As one embodiment, the PDCCH to which the first DCI signaling is mapped belongs to a user equipment-specific search space set or a common search space set (CSS set). As one subsidiary embodiment of the above embodiment, the benefits of doing so are to ensure consistency and improve flexibility.

As one embodiment, the first signal is a baseband signal or a radio frequency signal.

As one embodiment, the first signal is transmitted through an air interface or a wireless interface.

As one embodiment, the first signal is a PDSCH.

As one embodiment, the first signal comprises a DMRS (demodulation reference signal) of a PDSCH.

As one embodiment, the first signal comprises a PDSCH and a DMRS.

As one embodiment, the first signal is a CSI-RS.

As one embodiment, the first signal comprises a dynamically scheduled PDSCH and a DMRS.

As one embodiment, the first signal comprises a semi-persistent scheduled PDSCH and a DMRS.

As one embodiment, the first signal is an aperiodic CSI-RS.

As one embodiment, quasi-co-location types in a configured TCI (transmission configuration indicator) state of a cell to which the first signal belongs comprise a typeD.

As one embodiment, quasi-co-location types in a configured TCI state of a cell to which the first signal belongs do not comprise the typeD.

As one embodiment, the technical feature "the first DCI signaling indicates a time-frequency resource occupied by the first signal" comprises the following meaning: all or part comprised in the first DCI signaling is used for explicitly or implicitly indicating the time-frequency resource occupied by the first signal.

As one embodiment, the technical feature "the first DCI signaling indicates a time-frequency resource occupied by the first signal" comprises the following meaning: two fields comprised in the first DCI signaling respectively indicate a time domain resource and a frequency domain resource occupied by the first signal.

As one embodiment, the technical feature "the first DCI signaling indicates a time-frequency resource occupied by the first signal" comprises the following meaning: one field comprised in the first DCI signaling simultaneously indicates the time domain resource and the frequency domain resource occupied by the first signal.

As one embodiment, the technical feature "the first DCI signaling indicates a time-frequency resource occupied by the first signal" comprises the following meaning: an FDRA (frequency domain resource assignment) field and a TDRA (time domain resource assignment) field comprised in the first DCI signaling respectively indicate the frequency domain resource and the time domain resource occupied by the first signal.

As one embodiment, the technical feature "the first DCI signaling indicates a time-frequency resource occupied by the first signal" comprises the following meaning: the first DCI signaling assigns or configures the time domain resource and the frequency domain resource occupied by the first signal.

As one embodiment, the technical feature "the first DCI signaling indicates a time-frequency resource occupied by the first signal" comprises the following meaning: the first DCI signaling indicates, from a plurality of candidate time-frequency resources, the time domain resource and the frequency domain resource occupied by the first signal, and the plurality of candidate time-frequency resources are predefined or are configured by higher-layer signaling or parameters.

As one embodiment, the technical feature "the first DCI signaling indicates a time-frequency resource occupied by the first signal" comprises the following meaning: the first DCI signaling indicates, from a plurality of CSI-RS resource sets, a CSI-RS resource set to which the first signal belongs, and the plurality of CSI-RS resource sets are predefined or are configured by higher-layer signaling or parameters.

As one embodiment, the technical feature "the first DCI signaling indicates a time-frequency resource occupied by the first signal" comprises the following meaning: the first DCI signaling indicates, from a plurality of CSI triggering states, a CSI triggering state corresponding to (or associated with) the first signal, and the plurality of CSI triggering states are predefined or are configured by higher-layer signaling or parameters.

As one embodiment, the technical feature "the first DCI signaling indicates a time-frequency resource occupied by the first signal" comprises the following meaning: the first DCI signaling indicates a first CSI triggering state from the plurality of CSI triggering states, the first CSI triggering state corresponds to at least 1 CSI-RS resource set comprising the CSI-RS resource set to which the first signal belongs, the plurality of CSI triggering states are predefined or are configured by higher-layer signaling or parameters, and a correspondence relationship between the first CSI triggering state and a CSI-RS resource set is predefined or is configured by higher-layer signaling or parameters.

As one embodiment, the technical feature "the first DCI signaling indicates a time-frequency resource occupied by the first signal" comprises the following meaning: the first DCI signaling indicates a CSI-RS resource set to which the time-frequency resource occupied by the first signal belongs.

As one embodiment, the technical feature "the first DCI signaling indicates a time-frequency resource occupied by the first signal" comprises the following meaning: the first DCI signaling indicates resource mapping of the first signal.

As one embodiment, the technical feature "the first DCI signaling indicates a time-frequency resource occupied by the first signal" comprises the following meaning: the first DCI signaling indicates frequency domain assignment of the first signal, a starting OFDM symbol of a time domain, antenna port quantity and density.

As one embodiment, the technical feature "the first DCI signaling indicates a time-frequency resource occupied by the first signal" comprises the following meaning: the first DCI signaling indicates the frequency domain assignment of the first signal, the starting OFDM symbol of the time domain, the density and a code division multiplexing type.

As one embodiment, the time offset value between the first DCI signaling and the first signal in the time domain is an offset value between a latest symbol of a PDCCH carrying the first DCI signaling and an earliest symbol of the first signal.

As one embodiment, the time offset value between the first DCI signaling and the first signal in the time domain is an offset value between an ending moment of a latest symbol of the first DCI signaling and a starting moment of an earliest symbol of the first signal.

As one embodiment, the time offset value between the first DCI signaling and the first signal in the time domain is an offset value between an ending moment of a latest symbol of the PDCCH carrying the first DCI signaling and the starting moment of an earliest symbol of the first signal.

As one embodiment, the time offset value between the first DCI signaling and the first signal in the time domain is an absolute time interval length between the first DCI signaling and the first signal in the time domain.

As one embodiment, the time offset value between the first DCI signaling and the first signal in the time domain is the number of symbols spaced in the time domain between the first DCI signaling and the first signal.

As one embodiment, the time offset value between the first DCI signaling and the first signal in the time domain is the number of symbols for one subcarrier spacing, that are spaced in the time domain between the first DCI signaling and the first signal.

As one embodiment, the first signal is not earlier than the first DCI signaling.

As one embodiment, a starting moment of the first signal is not earlier than a starting moment of the first DCI signaling.

As one embodiment, the starting moment of the first signal is not earlier than an ending moment of the first DCI signaling.

As one embodiment, the first threshold is expressed by the number of symbols.

As one embodiment, the first threshold is expressed by the number of symbols for one subcarrier spacing.

As one embodiment, the first threshold is expressed by the number of symbols for a subcarrier spacing of the PDCCH carrying the first DCI signaling.

As one embodiment, the first threshold is expressed by the number of symbols for a subcarrier spacing of the first signal.

As one embodiment, the first threshold is expressed by the number of symbols for a reference subcarrier spacing, and the reference subcarrier spacing is predefined or is related to a frequency range.

As one embodiment, the first threshold is expressed by an absolute time converted from the number of symbols for one subcarrier spacing.

As one embodiment, one parameter (or variable) comprised in the first threshold is expressed by the number of symbols for one subcarrier spacing, and another parameter (or variable) comprised in the first threshold is expressed by an absolute time.

As one embodiment, the first threshold is expressed in an absolute time length.

As one embodiment, the first threshold is a value of "timeDurationForQCL".

As one embodiment, the first threshold is equal to a sum between a value of "timeDurationForQCL" and an additional delay value, and the additional delay value depends on a subcarrier spacing of a PDCCH.

As one embodiment, the first threshold defines a minimum number of OFDM symbols between a moment of PDCCH reception and a moment when a PDSCH uses spatial QCL information received in DCI.

As one embodiment, a value of one parameter (or variable) comprised in the first threshold is a value of "timeDurationForQCL".

As one embodiment, one parameter (or variable) comprised in the first threshold defines a minimum number of OFDM symbols between a moment of PDCCH reception and a moment when a PDSCH uses spatial QCL information received in DCI.

As one embodiment, the first threshold is a value of "beamSwitchTiming".

As one embodiment, the first threshold is equal to a sum between the value of "beamSwitchTiming" and the additional delay value, and the additional delay value depends on a subcarrier spacing of a PDCCH.

As one embodiment, the first threshold indicates a minimum number of OFDM symbols between triggering DCI of an aperiodic CSI-RS and aperiodic CSI-RS transmission.

As one embodiment, a value of one parameter or variable comprised in the first threshold is the value of "beamSwitchTiming".

As one embodiment, one parameter or variable comprised in the first threshold indicates a minimum number of OFDM symbols between triggering DCI of an aperiodic CSI-RS and aperiodic CSI-RS transmission.

As one embodiment, the target control resource set is a PDCCH CORESET (control resource set).

As one embodiment, the target control resource set is configured by higher-layer signaling or higher-layer parameters.

As one embodiment, the target control resource set is one of at least 1 CORESET configured by higher-layer signaling or higher-layer parameters.

As one embodiment, the target control resource set is a monitored CORESET.

As one embodiment, the target control resource set is associated to at least 1 monitored search space.

As one embodiment, the target control resource set is one of one or more CORESETs monitored by the first node device.

As one embodiment, the target control resource set and the first signal belong to a same cell.

As one embodiment, the target control resource set and the first DCI signaling belong to a same cell.

As one embodiment, the target control resource set and the first DCI signaling respectively belong to different cells.

As one embodiment, the target control resource set belongs to an active BWP in a frequency domain.

As one embodiment, the target control resource set is a control resource set with a minimum index value that is monitored in a latest symbol of the same symbol type as at least one time domain symbol occupied in the time domain by the first signal.

As one embodiment, the target control resource set is a control resource set with a minimum index value that is monitored in a latest slot comprising symbols of the same symbol type as at least one time domain symbol occupied in the time domain by the first signal.

As one embodiment, the target control resource set is configured with more than 1 TCI state.

As one embodiment, the target control resource set is configured with only 1 TCI state.

As one embodiment, the target control resource set is not later than the first signal.

As one embodiment, the target control resource set is not later than the PDCCH carrying the first DCI signaling.

As one embodiment, a starting moment of the target control resource set is not later than the starting moment of the first signal.

As one embodiment, the starting moment of the target control resource set is not later than an ending moment of the first signal.

As one embodiment, an ending moment of the target control resource set is not later than the starting moment of the first signal.

As one embodiment, the ending moment of the target control resource set is not later than the ending moment of the first signal.

As one embodiment, a slot to which the target control resource set belongs in the time domain is not later than the first signal.

As one embodiment, the slot to which the target control resource set belongs in the time domain is not later than a slot to which a starting symbol occupied by the first signal belongs.

As one embodiment, the technical feature "the first signal and a target control resource set are quasi-co-located" comprises the following meaning: a demodulation reference signal port of the first signal and a reference signal of the target control resource set are quasi-co-located (QCLed).

As one embodiment, the technical feature "the first signal and a target control resource set are quasi-co-located" comprises the following meaning: the demodulation reference signal port of the first signal and a reference signal of a PDCCH in the target control resource set are quasi-co-located.

As one embodiment, the technical feature "the first signal and a target control resource set are quasi-co-located" comprises the following meaning: the demodulation reference signal port of the first signal and an antenna port provided by one TCI state with which the target control resource set is configured (or indicated) are quasi-co-located.

As one embodiment, the technical feature "the first signal and a target control resource set are quasi-co-located" comprises the following meaning: the demodulation reference signal port of the first signal and a reference signal associated with one TCI state with which the target control resource set is configured (or indicated) are quasi-co-located.

As one embodiment, the technical feature "the first signal and a target control resource set are quasi-co-located" comprises the following meaning: the demodulation reference signal port of the first signal and a reference signal for a PDCCH quasi-co-location indication of the target control resource set are quasi-co-located.

As one embodiment, the technical feature "the first signal and a target control resource set are quasi-co-located" comprises the following meaning: when the target control resource set is configured (or indicated) with a plurality of TCI states, the demodulation reference signal port of the first signal and the reference signal associated with one TCI state with which the target control resource set is configured (or indicated) are quasi-co-located.

As one embodiment, the technical feature "the first signal and a target control resource set are quasi-co-located" comprises the following meaning: the first node device receives the first signal using a quasi-co-location parameter (QCL parameter) of the target control resource set.

As one embodiment, the technical feature "the first signal and a target control resource set are quasi-co-located" comprises the following meaning: the first node device receives the first signal using one TCI state with which the target control resource set is configured (or indicated).

As one embodiment, the technical feature "the first signal and a target control resource set are quasi-co-located" comprises the following meaning: when the target control resource set is configured (or indicated) with a plurality of TCI states, the first node device receives the first signal using one TCI state with which the target control resource set is configured (or indicated).

As one embodiment, a quasi-co-location type between the first signal and the target control resource set is the typeD.

As one embodiment, the quasi-co-location type between the first signal and the target control resource set is a type other than the typeD.

As one embodiment, the technical feature "the first threshold depends on the capability of the first node device" comprises the following meaning: the first threshold is related to at least 1 capability parameter of the first node device.

As one embodiment, the technical feature "the first threshold depends on the capability of the first node device" comprises the following meaning: at least 1 parameter (or variable) for calculating the first threshold depends on the capability of the first node device.

As one embodiment, the technical feature "the first threshold depends on the capability of the first node device" comprises the following meaning: at least 1 capability parameter of the first node device is used for calculating the first threshold.

As one embodiment, the technical feature "the first threshold depends on the capability of the first node device" comprises the following meaning: the first threshold depends on a value of at least 1 capability parameter reported by the first node device.

As one embodiment, the technical feature "the first threshold depends on the capability of the first node device" comprises the following meaning: the first threshold is linearly correlated with the value of at least 1 capability parameter reported by the first node device.

As one embodiment, the technical feature "the first threshold depends on the capability of the first node device" comprises the following meaning: the first threshold is equal to the value of at least 1 capability parameter reported by the first node device.

As one embodiment, the technical feature "the first threshold depends on the capability of the first node device" comprises the following meaning: a value of 1 parameter for calculating the first threshold is equal to a value of 1 capability parameter reported by the first node device.

As one embodiment, the technical feature "the first threshold depends on the capability of the first node device" comprises the following meaning: a capability report of the first node device comprises whether supporting that the first DCI signaling and the first signal respectively occupy different symbol types, and the first threshold is related to whether a symbol type occupied by the first DCI signaling is the same as a symbol type occupied by the first signal.

As one embodiment, the technical feature "the first threshold depends on the capability of the first node device" comprises the following meaning: the first threshold depends on a first capability parameter value in the present application.

As one embodiment, the technical feature "the first threshold depends on the capability of the first node device" comprises the following meaning: the first threshold depends on the first capability parameter value and a target offset value in the present application.

As one embodiment, a second information block in the present application indicates (or reports) the capability of the first node device.

As one embodiment, the second information block in the present application indicates a value of at least 1 capability parameter of the first node device.

As one embodiment, the first threshold is related to whether scheduling across types.

As one embodiment, the first threshold is related to whether scheduling between an SBFD symbol and a non-SBFD symbol.

As one embodiment, the first threshold is related to whether scheduling between an SBFD slot and a non-SBFD slot.

As one embodiment, the first threshold is related to whether a symbol type occupied by the first DCI signaling is the same as a symbol type occupied by the first signal.

As one embodiment, a value of at least one parameter or variable comprised in the first threshold is related to whether the symbol type occupied by the first DCI signaling is the same as the symbol type occupied by the first signal.

As one embodiment, the first threshold is associated with whether scheduling across symbol types, thereby considering a switching delay requirement between an SBFD symbol and a non-SBFD symbol, supporting product implementation and reducing product implementation complexity.

As one embodiment, the number of possible symbol types of one symbol is equal to 2.

As one embodiment, the number of possible symbol types of one symbol is greater than 2.

As one embodiment, a symbol type of one symbol is one of T1 symbol types, T1 is a positive integer greater than 1, and the T1 symbol types are predefined or are configurable. As one subsidiary embodiment of the above embodiment, the T1 symbol types comprise an SBFD symbol and a non-SBFD symbol. As one subsidiary embodiment of the above embodiment, the T1 symbol types comprise a symbol for which a subband of SBFD is configured in the time domain and a symbol for which a subband of SBFD is not configured in the time domain. As one subsidiary embodiment of the above embodiment, the T1 symbol types are symbols respectively corresponding to T1 TCI states. As one subsidiary embodiment of the above embodiment, the T1 symbol types are symbols respectively corresponding to T1 radio frequency links. As one subsidiary embodiment of the above embodiment, the T1 symbol types are symbols respectively corresponding to T1 beams. As one subsidiary embodiment of the above embodiment, the T1 symbol types are symbols respectively corresponding to T1 interference cancellation schemes. As one subsidiary embodiment of the above embodiment, the T1 symbol types are symbols respectively corresponding to T1 QCL relationships. As one subsidiary embodiment of the above embodiment, T1 is equal to 2. As one subsidiary embodiment of the above embodiment, T1 is greater than 2. As one subsidiary embodiment of the above embodiment, the T1 symbol types depend on the first information block. As one subsidiary embodiment of the above embodiment, the T1 symbol types depend on the capability of the first node device. As one subsidiary embodiment of the above embodiment, the first node device cannot assume having identical QCL parameters (or QCL assumption) in two symbols respectively belonging to different symbol types among the T1 symbol types.

As one embodiment, the symbol type of one symbol is an SBFD symbol or a non-SBFD symbol.

As one embodiment, the symbol type of one symbol is a symbol configured with SBFD or a symbol not configured with SBFD.

As one embodiment, the symbol type of one symbol is a symbol in an SBFD slot or a symbol in a non-SBFD slot.

As one embodiment, the symbol type of one symbol is a symbol for which a subband of SBFD is configured in the time domain or a symbol for which a subband of SBFD is not configured in the time domain.

As one embodiment, the symbol type of one symbol is a symbol supporting full duplex or a symbol not supporting full duplex.

As one embodiment, the symbol type of one symbol is a symbol to which SBFD is applicable or a symbol to which SBFD is not applicable.

As one embodiment, the symbol type of one symbol is a symbol that can be simultaneously used for uplink transmission and downlink transmission or a symbol that cannot be simultaneously used for uplink transmission and downlink transmission.

As one embodiment, the symbol type of one symbol is a symbol indicated (or provided) by the first information block or a symbol not indicated (or provided) by the first information block.

As one embodiment, the symbol type of one symbol is a symbol indicated as a downlink by "tdd-UL-DL-ConfigCommon" and configured (or indicated) as an SBFD symbol, or a symbol indicated as flexible by "tdd-UL-DL-ConfigCommon" and configured (or indicated) as an SBFD symbol, or a symbol not indicated as an SBFD symbol.

As one embodiment, the symbol type of one symbol is a symbol indicated as a downlink by "tdd-UL-DL-ConfigCommon" and indicated (or provided) by the first information block, or a symbol indicated as flexible by "tdd-UL-DL-ConfigCommon" and indicated (or provided) by the first information block, or a symbol not indicated (or provided) by the first information block.

As one embodiment, the symbol type of one symbol is a symbol indicated as a downlink by "tdd-UL-DL-ConfigCommon" or "tdd-UL-DL-ConfigDedicated" and configured (or indicated) as an SBFD symbol, or a symbol indicated as flexible by "tdd-UL-DL-ConfigCommon" or "tdd-UL-DL-ConfigDedicated" and configured (or indicated) as an SBFD symbol, or a symbol not indicated as an SBFD symbol.

As one embodiment, the symbol type of one symbol is a symbol indicated as a downlink by "tdd-UL-DL-ConfigCommon" or "tdd-UL-DL-ConfigDedicated" and indicated (or provided) by the first information block, or a symbol indicated as flexible by "tdd-UL-DL-ConfigCommon" or "tdd-UL-DL-ConfigDedicated" and indicated (or provided) by the first information block, or a symbol not indicated (or provided) by the first information block.

As one embodiment, only considering "tdd-UL-DL-ConfigCommon" simplifies a design and reduces standardization workload.

As one embodiment, considering both "tdd-UL-DL-ConfigCommon" and "tdd-UL-DL-ConfigDedicated" maximizes reuse of an existing design and ensures compatibility.

As one embodiment, considering both downlink symbols and flexible symbols expands configuration flexibility.

As one embodiment, only considering downlink symbols simplifies a system design.

As one embodiment, a "search space set" and a "search space set" in the present application are equivalent or may be used interchangeably.

As one embodiment, the target control resource set is only associated with 1 search space.

As one embodiment, the target control resource set is associated with a plurality of search spaces.

As one embodiment, a search space associated with the target control resource set is configured.

As one embodiment, any search space associated with the target control resource set is a search space configured to be associated to the target control resource set.

As one embodiment, any search space associated with the target control resource set is a search space applicable to the target control resource set.

As one embodiment, a search space associated with the target control resource set is a search space configured or indicated by an IE "SearchSpace" for which an indicated control resource set ID is equal to an ID of the target control resource set.

As one embodiment, a search space associated with the target control resource set is a search space for which a search space ID and the ID of the target control resource set are configured or indicated by a same IE "SearchSpace".

As one embodiment, a search space associated with the target control resource set is a search space for which time-frequency resources occupied by comprised PDCCH candidates belong to the target control resource set.

As one embodiment, a search space associated with the target control resource set is a search space for which any CCE (control channel element) occupied by comprised PDCCH candidates belongs to the target control resource set.

As one embodiment, a symbol type of at least one symbol occupied in the time domain by a search space associated with the target control resource set is a symbol type of at least one symbol occupied in the time domain by 1 monitored search space associated with the target control resource set.

As one embodiment, a symbol type of at least one symbol occupied in the time domain by a search space associated with the target control resource set is a symbol type of at least one symbol at which 1 search space associated with the target control resource set is monitored.

As one embodiment, a symbol type of at least one symbol occupied in the time domain by a search space associated with the target control resource set is a symbol type of at least one symbol occupied (or resource-mapped) in the time domain by one monitored PDCCH candidate in 1 search space associated with the target control resource set.

As one embodiment, a symbol type of at least one symbol occupied in the time domain by a search space associated with the target control resource set is a symbol type of at least one symbol occupied (or resource-mapped) in the time domain by 1 monitored PDCCH candidate whose occupied resource belongs to the target control resource set.

As one embodiment, a symbol type of at least one symbol occupied in the time domain by a search space associated with the target control resource set is a symbol type of at least one symbol where the target control resource set is located in the time domain when being monitored.

As one embodiment, a symbol type of at least one symbol occupied in the time domain by a search space associated with the target control resource set is a symbol type of at least one symbol occupied in the time domain by 1 PDCCH monitoring (or of at least one symbol to which 1 PDCCH monitoring belongs) indicated by 1 search space associated with the target control resource set.

As one embodiment, a symbol type of at least one symbol occupied in the time domain by a search space associated with the target control resource set is a symbol type of at least one symbol occupied in the time domain by the target control resource set (or at least one symbol to which the target control resource set belongs) when the target control resource set indicated by 1 search space associated with the target control resource set is monitored.

As one embodiment, a symbol type of at least one symbol occupied in the time domain by a search space associated with the target control resource set is a symbol type of at least one symbol comprised in 1 slot to which the target control resource set belongs in the time domain when the target control resource set is monitored.

As one embodiment, a symbol type of at least one symbol occupied in the time domain by 1 search space associated with the target control resource set is different from a symbol type of at least one symbol occupied in the time domain by another 1 search space associated with the target control resource set. As one subsidiary embodiment of the above embodiment, the benefits of doing so are that the search space corresponds to different symbol types, such that a design can be simplified and impacts on existing users can be reduced.

As one embodiment, symbol types occupied in the time domain by any 2 search spaces associated with the target control resource set are the same. As one subsidiary embodiment of the above embodiment, the benefits of doing so are that flexibility can be increased.

As one embodiment, symbol types of any two symbols occupied in the time domain by any 1 search space associated with the target control resource set are the same. As one subsidiary embodiment of the above embodiment, the benefits of doing so are that the consistency of the search space is ensured and a design is simple.

As one embodiment, symbol types of two symbols occupied in the time domain by 1 search space associated with the target control resource set are not the same. As one subsidiary embodiment of the above embodiment, the benefits of doing so are that flexibility can be increased.

As one embodiment, a symbol type of at least one symbol occupied in the time domain by the first signal is a symbol type of at least one symbol to which the first signal is resource-mapped in the time domain.

As one embodiment, a symbol type of at least one symbol occupied in the time domain by the first signal is a symbol type of at least one symbol comprised in one slot occupied by the first signal (or to which the first signal belongs) in the time domain.

As one embodiment, symbol types of any two symbols occupied in the time domain by the first signal are the same. As one subsidiary embodiment of the above embodiment, the benefits of doing so are to avoid mapping the first signal to a plurality of symbol types, and simplify a design and implementation.

As one embodiment, symbol types of two symbols occupied in the time domain by the first signal are not the same. As one subsidiary embodiment of the above embodiment, the benefits of doing so are that flexibility can be increased.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of any symbol occupied in the time domain by the search space associated with the target control resource set and a symbol type of any symbol occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of at least 1 symbol comprised in a slot to which one symbol occupied in the time domain by the search space associated with the target control resource set belongs and a symbol type of at least 1 symbol comprised in the slot to which one symbol occupied in the time domain by the first signal belongs are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of partial symbols occupied in the time domain by the search space associated with the target control resource set and a symbol type of all symbols occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of all symbols occupied in the time domain by the search space associated with the target control resource set and a symbol type of all symbols occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of partial symbols occupied in the time domain by the search space associated with the target control resource set and a symbol type of partial symbols occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of all symbols occupied in the time domain by the search space associated with the target control resource set and a symbol type of partial symbols occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of at least 1 symbol in 1 slot in which the target control resource set is monitored and a symbol type of at least 1 symbol occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises: a symbol type of at least 1 symbol in 1 slot in which the target control resource set is monitored and a symbol type of at least 1 symbol comprised in a slot to which the starting symbol occupied in the time domain by the first signal belongs are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: a symbol type of at least 1 symbol in 1 slot in which the target control resource set is monitored and a symbol type of the starting symbol occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: when the first information block is configured or provided, the symbol type of the at least one symbol occupied by the search space associated with the target control resource set in the time domain and the symbol type of the at least one symbol occupied in the time domain by the first signal are the same.

As one embodiment, the technical feature "a symbol type of at least one symbol occupied in the time domain by a search space associated with the target control resource set is the same as a symbol type of at least one symbol occupied in the time domain by the first signal" comprises the following meaning: when there is a configured CORESET for which the symbol type of at least one symbol occupied by an associated search space in the time domain and the symbol type of the at least one symbol occupied in the time domain by the first signal are the same, the target control resource set is a CORESET for which the symbol type of the at least one symbol occupied by the associated search space in the time domain and the symbol type of the at least one symbol occupied in the time domain by the first signal are the same.

As one embodiment, when there is no configured CORESET for which a symbol type of at least one symbol occupied by an associated search space in the time domain is the same as a symbol type of at least one symbol occupied in the time domain by the first signal, the target control resource set is a CORESET with a minimum index value that is monitored in a latest slot.

As one embodiment, one piece of signaling indicates whether the first node device can assume quasi-co-location between the first signal and a CORESET for which a symbol type occupied by an associated search space in the time domain is different from a symbol type of at least one symbol occupied in the time domain by the first signal. As one subsidiary embodiment of the above embodiment, this signaling is configured per CORESET. As one subsidiary embodiment of the above embodiment, this signaling is configured per search space.

As one embodiment, the technical feature "a symbol type of at least one symbol occupied in the time domain by a search space associated with the target control resource set is the same as a symbol type of at least one symbol occupied in the time domain by the first signal" comprises the following meaning: when the first signal cannot be (or can be assumed by UE to be) quasi-co-located with a CORESET for which the symbol type occupied by the associated search space in the time domain is different from the symbol type of the at least one symbol occupied in the time domain by the first signal, the target control resource set is a CORESET for which the symbol type of the at least one symbol occupied by the associated search space in the time domain is the same as the symbol type of the at least one symbol occupied in the time domain by the first signal; and when the first signal can be (or can be assumed by UE to be) quasi-co-located with a CORESET for which the symbol type occupied by the associated search space in the time domain is different from the symbol type of the at least one symbol occupied in the time domain by the first signal, the target control resource set is a CORESET with a minimum index value that is monitored in a latest slot, and the CORESET can be (or can be assumed by the UE to be) quasi-co-located with the first signal.

As one embodiment, the technical feature "a symbol type of at least one symbol occupied in the time domain by a search space associated with the target control resource set is the same as a symbol type of at least one symbol occupied in the time domain by the first signal" comprises the following meaning: when there is a configured CORESET that can be (or can be assumed by UE to be) quasi-co-located with the first signal, the target control resource set is a CORESET with the minimum index value that is monitored in the latest slot and that can be (or can be assumed by the UE to be) quasi-co-located with the first signal.

As one embodiment, when there is no configured CORESET that can be (or can be assumed by UE to be) quasi-co-located with the first signal, the target control resource set is a CORESET with a minimum index value that is monitored in a latest slot.

As one embodiment, the technical feature "a symbol type of at least one symbol occupied in the time domain by a search space associated with the target control resource set is the same as a symbol type of at least one symbol occupied in the time domain by the first signal" comprises the following meaning: the target control resource set is a control resource set with a minimum index value that is monitored in a latest symbol of the same symbol type as at least one time domain symbol occupied in the time domain by the first signal.

As one embodiment, the technical feature "a symbol type of at least one symbol occupied in the time domain by a search space associated with the target control resource set is the same as a symbol type of at least one symbol occupied in the time domain by the first signal" comprises the following meaning: the target control resource set is a CORESET with a minimum index value that is monitored in a latest slot, and the CORESET can be (or can be assumed by UE to be) quasi-co-located with the first signal.

As one embodiment, the TDD uplink/downlink configuration comprises part of or all fields in IE "tdd-UL-DL-ConfigCommon".

As one embodiment, the TDD uplink/downlink configuration comprises part of or all fields in IE "tdd-UL-DL-ConfigDedicated".

As one embodiment, the TDD uplink/downlink configuration is an uplink/downlink TDD configuration used for determining a slot format.

As one embodiment, the technical feature "a symbol type of at least 1 symbol indicated as a downlink by a TDD uplink/downlink configuration depends on the first information block" comprises the following meaning: a symbol type of only 1 symbol indicated as a downlink by the TDD uplink/downlink configuration depends on the first information block.

As one embodiment, the technical feature "a symbol type of at least 1 symbol indicated as a downlink by a TDD uplink/downlink configuration depends on the first information block" comprises the following meaning: symbol types of a plurality of symbols indicated as downlinks by the TDD uplink/downlink configuration depend on the first information block.

As one embodiment, the technical feature "a symbol type of at least 1 symbol indicated as a downlink by a TDD uplink/downlink configuration depends on the first information block" comprises the following meaning: all or part comprised in the first information block explicitly or implicitly indicates the symbol type of the at least 1 symbol indicated as the downlink by the TDD uplink/downlink configuration.

As one embodiment, the technical feature "a symbol type of at least 1 symbol indicated as a downlink by a TDD uplink/downlink configuration depends on the first information block" comprises the following meaning: symbols indicated (or provided) by the first information block are one type of symbols, and symbols not indicated (or provided) by the first information block are another type of symbols.

As one embodiment, the technical feature "a symbol type of at least 1 symbol indicated as a downlink by a TDD uplink/downlink configuration depends on the first information block" comprises the following meaning: symbols that completely or partially overlap with symbols indicated (or provided) by the first information block are one type of symbols, and symbols that do not overlap with symbols indicated (or provided) by the first information block are another type of symbols.

As one embodiment, the technical feature "a symbol type of at least 1 symbol indicated as a downlink by a TDD uplink/downlink configuration depends on the first information block" comprises the following meaning: all or part comprised in the first information block explicitly or implicitly indicates whether 1 symbol is a symbol of a first type or a symbol of a type other than the first type in the present application.

As one embodiment, the technical feature "a symbol type of at least 1 symbol indicated as a downlink by a TDD uplink/downlink configuration depends on the first information block" comprises the following meaning: all or part comprised in the first information block explicitly or implicitly indicates whether the at least 1 symbol indicated as the downlink by the TDD uplink/downlink configuration is a symbol of the first type or a symbol of a type other than the first type in the present application.

As one embodiment, the technical feature "a symbol type of at least 1 symbol indicated as a downlink by a TDD uplink/downlink configuration depends on the first information block" comprises the following meaning: the first information block indicates at least 1 symbol of the first type in the present application from a periodic time window in the present application, and the periodic time window comprises a plurality of consecutive symbols.

As one embodiment, the technical feature "a symbol type of at least 1 symbol indicated as a downlink by a TDD uplink/downlink configuration depends on the first information block" comprises the following meaning: the first information block indicates at least 1 symbol; any 1 symbol indicated as the downlink by the TDD uplink/downlink configuration and overlapping with a symbol indicated by the first information block is one type of symbols; and any 1 symbol indicated as the downlink by the TDD uplink/downlink configuration and not overlapping with a symbol indicated by the first information block is another type of symbols.

As one embodiment, the technical feature "a symbol type of at least 1 symbol indicated as a downlink by a TDD uplink/downlink configuration depends on the first information block" comprises the following meaning: the first information block indicates at least 1 symbol according to the reference subcarrier spacing, and any 1 symbol indicated as the downlink by the TDD uplink/downlink configuration and overlapping with a symbol indicated by the first information block is one type of symbols; and any 1 symbol indicated as the downlink by the TDD uplink/downlink configuration and not overlapping with a symbol indicated by the first information block is another type of symbols, and the reference subcarrier spacing is predefined or is configured by signaling. As one subsidiary embodiment of the above embodiment, "the reference subcarrier spacing is predefined" refers to that the reference subcarrier spacing is fixed. As one subsidiary embodiment of the above embodiment, "the reference subcarrier spacing is predefined" refers to that the reference subcarrier spacing is related to a frequency range (FR). As one subsidiary embodiment of the above embodiment, "the reference subcarrier spacing is predefined" refers to that the reference subcarrier spacing is related to a band index. As one subsidiary embodiment of the above embodiment, "the reference subcarrier spacing is predefined" refers to that the reference subcarrier spacing is equal to a subcarrier spacing of an initial downlink Bandwidth Part (BWP). As one subsidiary embodiment of the above embodiment, "the reference subcarrier spacing is predefined" refers to that the reference subcarrier spacing is equal to a subcarrier spacing of an initial uplink Bandwidth Part (BWP).

As one embodiment, the technical feature "a symbol type of at least 1 symbol indicated as a downlink by a TDD uplink/downlink configuration depends on the first information block" comprises the following meaning: the first information block indicates at least 1 symbol; any 1 symbol indicated as the downlink by the TDD uplink/downlink configuration and overlapping with a symbol indicated by the first information block is one type of symbols; any 1 symbol indicated as flexible by the TDD uplink/downlink configuration and overlapping with a symbol indicated by the first information block is another type of symbols; and a symbol not overlapping with a symbol indicated by the first information block is a third type of symbols.

As one embodiment, the technical feature "a symbol type of at least 1 symbol indicated as a downlink by a TDD uplink/downlink configuration depends on the first information block" comprises the following meaning: the symbol type of the at least 1 symbol indicated as the downlink by the TDD uplink/downlink configuration is related to whether the first information block is provided.

As one embodiment, the technical feature "a symbol type of at least 1 symbol indicated as a downlink by a TDD uplink/downlink configuration depends on the first information block" comprises the following meaning: a target symbol is 1 symbol indicated as the downlink by the TDD uplink/downlink configuration; when the target symbol completely or partially overlaps with one symbol indicated by the first information block in the time domain, the target symbol is one type of symbols; otherwise, the target symbol is another type of symbols.

As one embodiment, the technical feature "a symbol type of at least 1 symbol indicated as a downlink by a TDD uplink/downlink configuration depends on the first information block" comprises the following meaning: the target symbol is 1 symbol indicated as the downlink by the TDD uplink/downlink configuration; when the first information block is provided and the target symbol completely or partially overlaps with one symbol indicated by the first information block in the time domain, the target symbol is one type of symbols; otherwise, the target symbol is another type of symbols.

### Embodiment 2

Embodiment 2 illustrates a schematic diagram of a network architecture according to the present application, as shown in FIG. 2. FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220 and an Internet service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application can be extended to networks that provide circuit switching services or other cellular networks. The NG-RAN comprises an NR/evolved node B (gNB/eNB) 203 and other gNBs (eNBs) 204. The gNB (eNB) 203 provides user and control plane protocol termination towards the UE201. The gNB (eNB) 203 may be connected to the other gNBs (eNBs) 204 via an Xn/X2 interface (e.g., backhaul). The gNB (eNB) 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The gNB (eNB) 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, a test device, a test instrument, a test tool, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB (eNB) 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Date Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet services 230. The Internet services 230 comprise an operator-corresponding Internet protocol service, which may specifically comprise the Internet, an intranet, an IMS (IP Multimedia Subsystem), and packet switching streaming services.

As one embodiment, the UE201 corresponds to a first node device in the present application.

As one embodiment, the UE201 supports transmission in a flexible duplex mode.

As one embodiment, the gNB (eNB) 201 corresponds to a second node device in the present application.

As one embodiment, the gNB (eNB) 201 supports transmission in a flexible duplex mode.

### Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture of the control plane 300 for a first node device (UE or a gNB) and a second node device (a gNB or UE) using three layers: a Layer 1, a Layer 2, and a Layer 3. The Layer 1 (L1 layer) is a lowest layer and implements various PHY (physical layer) signal processing functions. The L1 layer will be referred to as a PHY301 herein. A Layer 2 (L2 layer) 305 is above the PHY301, and is responsible for a link between the first node device and the second node device through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second node device. The PDCP sublayer 304 provides multiplexing between different radio bearers and logical channels. The PDCP sublayer 304 also provides security by encrypting data packets, and provides handover mobile support on the first node device between the second node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., an IP layer) terminating at a P-GW on a network side and an application layer terminating at another end of connection (e.g., remote UE, a server, etc.).

As one embodiment, the wireless protocol architecture in FIG. 3 is applicable to the first node device in the present application.

As one embodiment, the wireless protocol architecture in FIG. 3 is applicable to the second node device in the present application.

As one embodiment, a first information block in the present application is generated in an RRC306, or a MAC302, or a MAC352, or the PHY301, or a PHY351.

As one embodiment, first DCI signaling in the present application is generated in the PHY301 or the PHY351.

As one embodiment, a second information block in the present application is generated in the RRC306, or the MAC302, or the MAC352, or the PHY301, or the PHY351.

As one embodiment, a first signal in the present application is generated in the RRC306, or the MAC302, or the MAC352, or the PHY301, or the PHY351.

As one embodiment, a third information block in the present application is generated in the RRC306, or the MAC302, or the MAC352, or the PHY301, or the PHY351.

### Embodiment 4

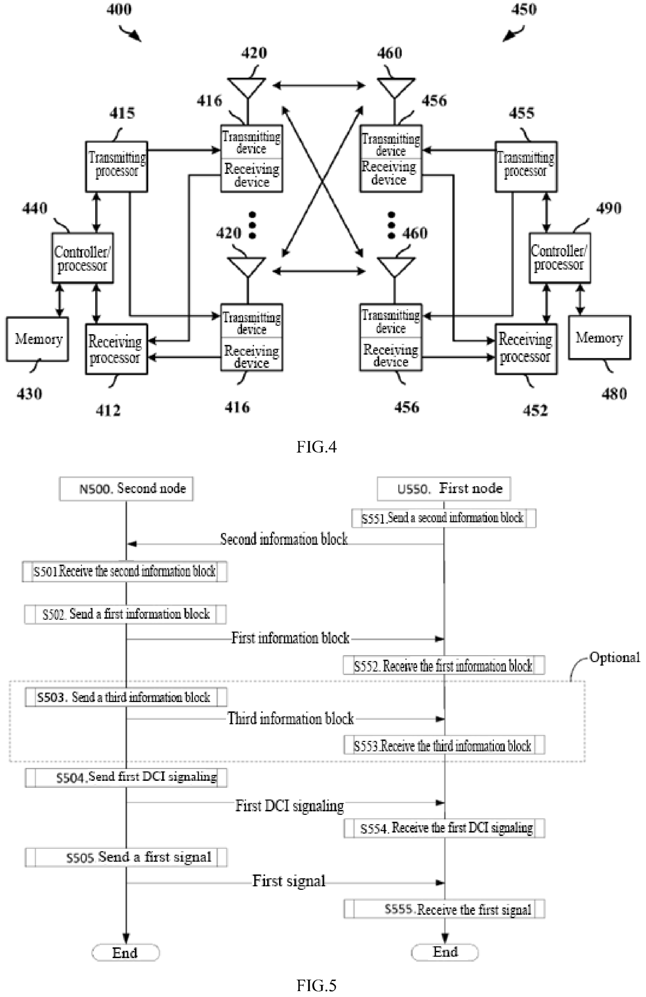

Embodiment 4 shows a schematic diagram of a first node device and a second node device according to one embodiment of the present application, as shown in FIG. 4.

The first node device (450) may comprise a controller/processor 490, a data source/buffer 480, a receiving processor 452, a transmitting device/receiving device 456, and a transmitting processor 455, and the transmitting device/receiving device 456 comprises an antenna 460.

The second node device (410) may comprise a controller/processor 440, a data source/buffer 430, a receiving processor 412, a transmitting device/receiving device 416, and a transmitting processor 415, and the transmitting device/receiving device 416 comprises an antenna 420.

In a DL (Downlink), an upper-layer packet is provided to the controller/processor 440. The controller/processor 440 implements functions of an L2 layer and layers above it. In the DL, the controller/processor 440 provides packet header compression, encryption, packet segmentation and reordering, multiplexing between logical and transport channels, and radio resource assignment to the first node device 450 based on various priority metrics. The controller/processor 440 is also responsible for an HARQ operation, retransmission of a lost packet, and high-layer signaling to the first node device 450. High-layer information carried by a first information block, a first signal (if the first signal carries the high-layer information) and a third information block in the present application is generated in the controller/processor 440. The transmitting processor 415 implements various signal processing functions for an L1 layer (i.e., a physical layer), comprising coding, interleaving, scrambling, modulation, power control/assignment, precoding, and physical layer control signaling generation, etc. For example, generation of a physical layer signal carrying the first information block in the present application, the first signal, and a physical layer signal carrying the third information block is completed at the transmitting processor 415. Generated modulation symbols are divided into parallel streams, and each stream is mapped to a corresponding multi-carrier sub-carrier and/or multi-carrier symbol, which is then mapped to the antenna 420 by the transmitting processor 415 via the transmitting device 416 to be transmitted in a radio frequency signal form. At a receiving end, each receiving device 456 receives a radio frequency signal through its corresponding antenna 460, and each receiving device 456 recovers baseband information modulated onto a radio frequency carrier and provides the baseband information to the receiving processor 452. The receiving processor 452 implements various signal reception processing functions of the L1 layer. The signal receiving processing functions comprise receiving a physical layer signal carrying the first information block in the present application, the first signal in the present application, and a physical layer signal carrying the third information block in the present application, performing demodulation based on various modulation solutions (e.g., binary phase shift keying (BPSK), and quadrature phase shift keying (QPSK)) through multi-carrier symbols in a multi-carrier symbol stream, and then descrambling, decoding and deinterleaving to recover data or control transmitted by the second node device 410 on the physical channel, and then providing the data and control signals to the controller/processor 490. The controller/processor 490 is responsible for the L2 layer and layers above it, and the controller/processor 490 interprets the high-layer information. Interpretation of high-layer information carried by the first information block, the first signal (if the first signal carries the high-layer information) and the third information block is comprised. The controller/processor may be associated with a memory 480 storing a program code and data. The memory 480 may be referred to as a computer-readable medium.

In uplink (UL) transmission, similar to downlink transmission, high-layer information comprising high-layer information carried by a second information block in the present application is generated at the controller/processor 490 and then is implemented by the transmitting processor 455 for various signal transmission processing functions for the L1 layer (i.e., a physical layer), and a physical layer signal carrying the second information block is mapped to the antenna 460 by the transmitting processor 455 via the transmitting device 456 and is transmitted in a radio frequency signal form. The receiving device 416 receives a radio frequency signal through its corresponding antenna 420, and each receiving device 416 recovers baseband information modulated on a radio frequency carrier and provides the baseband information to the receiving processor 412. The receiving processor 412 implements various signal receiving processing functions for the L1 layer (i.e., a physical layer), comprising receiving and processing a physical layer signal carrying the second information block in the present application, and then providing data and/or control signals to the controller/processor 440. Functions of the L2 layer implemented at the controller/processor 440 comprise interpreting high-layer information such as high-layer information carried by the second information block. The controller/processor may be associated with the buffer 430 storing a program code and data. The buffer 430 may be a computer-readable medium.

As one embodiment, the first node device 450 apparatus comprises: at least one processor and at least one memory, the at least one memory comprising a computer program code; the at least one memory and the computer program code are configured to be used together with the at least one processor, and the first node device 450 apparatus at least: receives the first information block; and receives first DCI signaling and receives the first signal, the first DCI signaling indicating a time-frequency resource occupied by the first signal, wherein a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

As one embodiment, the first node device 450 apparatus comprises: a memory storing a computer-readable instruction program, the computer-readable instruction program generating actions when executed by at least one processor, and the actions comprising: receiving the first information block; and receiving the first DCI signaling and receiving the first signal, the first DCI signaling indicating the time-frequency resource occupied by the first signal, wherein the time offset value between the first DCI signaling and the first signal in the time domain is smaller than the first threshold, and the first signal and the target control resource set are quasi-co-located; the first threshold depends on the capability of the first node device, and the symbol type of at least one symbol occupied in the time domain by the search space associated with the target control resource set is the same as the symbol type of at least one symbol occupied in the time domain by the first signal; and the symbol type of at least 1 symbol indicated as the downlink by the TDD uplink/downlink configuration depends on the first information block.

As one embodiment, the second node device 410 apparatus comprises: at least one processor and at least one memory, the at least one memory comprising a computer program code; and the at least one memory and the computer program code are configured to be used together with the at least one processor. The second node device 410 apparatus at least: sends the first information block; and sends the first DCI signaling and sends the first signal, the first DCI signaling indicating the time-frequency resource occupied by the first signal, wherein the time offset value between the first DCI signaling and the first signal in the time domain is smaller than the first threshold, and the first signal and the target control resource set are quasi-co-located; the first threshold depends on the capability of the first node device, and the symbol type of at least one symbol occupied in the time domain by the search space associated with the target control resource set is the same as the symbol type of at least one symbol occupied in the time domain by the first signal; and the symbol type of at least 1 symbol indicated as the downlink by the TDD uplink/downlink configuration depends on the first information block.

As one embodiment, the second node device 410 comprises: a memory storing a computer-readable instruction program, the computer-readable instruction program generating actions when executed by at least one processor, and the actions comprising: sending the first information block; and sending the first DCI signaling and sending the first signal, the first DCI signaling indicating the time-frequency resource occupied by the first signal, wherein the time offset value between the first DCI signaling and the first signal in the time domain is smaller than the first threshold, and the first signal and the target control resource set are quasi-co-located; the first threshold depends on the capability of the first node device, and the symbol type of at least one symbol occupied in the time domain by the search space associated with the target control resource set is the same as the symbol type of at least one symbol occupied in the time domain by the first signal; and the symbol type of at least 1 symbol indicated as the downlink by the TDD uplink/downlink configuration depends on the first information block.

As one embodiment, the first node device 450 is one piece of user equipment (UE).

As one embodiment, the first node device 450 is one piece of user equipment supporting transmission in a flexible duplex mode.

As one embodiment, the second node device 410 is one base station device (gNB/eNB).

As one embodiment, the second node device 410 is one base station device supporting transmission in a flexible duplex mode.

As one embodiment, the receiving device 456 (comprising the antenna 460), the receiving processor 452, and the controller/processor 490 are used for receiving the first information block in the present application.

As one embodiment, the receiving device 456 (comprising the antenna 460) and the receiving processor 452 are used for receiving the first DCI signaling in the present application.

As one embodiment, the receiving device 456 (comprising the antenna 460), the receiving processor 452 and the controller/processor 490 are used for receiving the first signal in the present application.

As one embodiment, the transmitting device 456 (comprising the antenna 460), the transmitting processor 455, and the controller/processor 490 are used for sending the second information block in the present application.

As one embodiment, the receiving device 456 (comprising the antenna 460), the receiving processor 452, and the controller/processor 490 are used for receiving the third information block in the present application.

As one embodiment, the transmitting device 416 (comprising the antenna 420), the transmitting processor 415, and the controller/processor 440 are used for sending the first information block in the present application.

As one embodiment, the transmitting device 416 (comprising the antenna 420) and the transmitting processor 415 are used for sending the first DCI signaling in the present application.

As one embodiment, the transmitting device 416 (comprising the antenna 420), the transmitting processor 415, and the controller/processor 440 are used for sending the first signal in the present application.

As one embodiment, the receiving device 416 (comprising the antenna 420), the receiving processor 412, and the controller/processor 440 are used for receiving the second information block in the present application.

As one embodiment, the transmitting device 416 (comprising the antenna 420), the transmitting processor 415, and the controller/processor 440 are used for sending the third information block in the present application.

### Embodiment 5

Embodiment 5 illustrates a flowchart of wireless signal transmission according to one embodiment of the present application, as shown in FIG. 5. In FIG. 5, a second node device N500 is a maintenance base station of a serving cell of a first node device U550, and steps in a dotted line box are optional. It is particularly noted that the order in this example does not limit a signal transmission order and implementation order in the present application.

For **the second node device N500,** a second information block is received in step S501, a first information block is sent in step S502, a third information block is sent in step S503, first DCI signaling is sent in step S504, and a first signal is sent in step S505;

and for **the first node device U550,** the second information block is sent in step S551, the first information block is received in step S552, the third information block is received in step S553, the first DCI signaling is received in step S554, and the first signal is received in step S555.

In Embodiment 5, the first DCI signaling indicating a time-frequency resource occupied by the first signal; a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; a symbol type of at least 1 symbol indicated as a downlink by a TDD uplink/downlink configuration depends on the first information block; the second information block indicates a first capability parameter value, and the first threshold depends on the first capability parameter value and a target offset value; the target offset value depends on at least one of the first information block or the second information block; the third information block indicates a same reference signal for quasi-co-location of a demodulation reference signal for a physical downlink shared channel, a demodulation reference signal for a physical downlink control channel, and a channel status information reference signal; and a PCI associated with a TCI state with which the first signal is configured is different from a PCI of a serving cell to which the first signal belongs.

As one embodiment, the second information block is transmitted through an air interface or a wireless interface.

As one embodiment, the second information block comprises all or part of high-layer signaling or physical layer signaling.

As one embodiment, the second information block is earlier than the first information block.

As one embodiment, the second information block is later than the first information block.

As one embodiment, the second information block is ahead of the TDD uplink/downlink configuration.

As one embodiment, the second information block is behind the TDD uplink/downlink configuration.

As one embodiment, the second information block comprises all or part of RRC signaling, or the second information block comprises all or part of MAC layer signaling.

As one embodiment, the second information block is transmitted through a PUSCH or a PUCCH (Physical Uplink Control Channel).

As one embodiment, the second information block is used for indicating the capability of the first node device in the present application.

As one embodiment, a sender of the second information block is the first node device in the present application.

As one embodiment, the second information block comprises IE "Phy-ParametersFRX-Diff", or the second information block comprises IE "UE-NR-Capability".

As one embodiment, the second information block comprises IE "BandCombinationList", or the second information block comprises IE "BandCombination", or the second information block comprises IE "BandNR", or the second information block comprises IE "FeatureSetUplink", or the second information block comprises IE "FeatureSetUplinkPerCC", or the second information block comprises IE "Phy-Parameters".

As one embodiment, the technical feature "the second information block indicates a first capability parameter value" comprises the following meaning: all or part comprised in the second information block explicitly or implicitly indicates the first capability parameter value.

As one embodiment, the technical feature "the second information block indicates a first capability parameter value" comprises the following meaning: all or part comprised in the second information block explicitly or implicitly indicates the first capability parameter value of the sender of the second information block.

As one embodiment, the technical feature "the second information block indicates a first capability parameter value" comprises the following meaning: all or part comprised in the first information block explicitly or implicitly indicates the first capability parameter value.

As one embodiment, the third information block is earlier than the first information block.

As one embodiment, the third information block is later than the first information block.

As one embodiment, the second information block is earlier than the third information block.

As one embodiment, the second information block is later than the third information block.

As one embodiment, the third information block comprises higher-layer information or a higher-layer parameter configuration.

As one embodiment, the third information block comprises one or more IEs (Information Elements) comprised in one piece of RRC (Radio Resource Control) layer signaling, or the third information block comprises one or more fields comprised in one piece of RRC layer signaling.

As one embodiment, the third information block is UE specific or UE dedicated.

As one embodiment, the third information block is configured per subband.

As one embodiment, the third information block is configured per carrier.

As one embodiment, the third information block is configured per bandwidth part (BWP).

As one embodiment, the third information block comprises part of or all fields (or parameters) in IE "PDSCH-Config".

As one embodiment, the third information block comprises a field (or high-layer parameter) "dl-OrJoint-TCIStateList".

As one embodiment, the third information block comprises a field (or high-layer parameter) "dl-OrJointTCI-StateList-r17".

As one embodiment, the third information block comprises a field (or high-layer parameter) "dl-OrJointTCI-StateList-r18".

As one embodiment, the third information block comprises a field (or high-layer parameter) "dl-OrJointTCI-StateList-r19".

As one embodiment, the third information block comprises a field (or high-layer parameter) "unifiedTCI-StateRef".

As one embodiment, the third information block comprises a field (or high-layer parameter) "dl-OrJointTCI-StateToAddModList".

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates the same reference signal for quasi-co-location of the demodulation reference signal for the physical downlink shared channel, the demodulation reference signal for the physical downlink control channel, and the channel status information reference signal.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates a plurality of candidate reference signals for unified updating of quasi-co-location of the demodulation reference signal for the physical downlink shared channel, the demodulation reference signal for the physical downlink control channel, and the channel status information reference signal.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates a same TCI state for the demodulation reference signal for the physical downlink shared channel, the demodulation reference signal for the physical downlink control channel, and the channel status information reference signal.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates a plurality of reference signals, and the same reference signal for quasi-co-location of the demodulation reference signal for the physical downlink shared channel, the demodulation reference signal for the physical downlink control channel, and the channel status information reference signal is one of the plurality of reference signals.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates a plurality of TCI states, and the same reference signal for quasi-co-location of the demodulation reference signal for the physical downlink shared channel, the demodulation reference signal for the physical downlink control channel, and the channel status information reference signal is a reference signal comprised (or indicated or provided) by one TCI state among the plurality of TCI states.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates the plurality of TCI states, all or part comprised in the first DCI signaling explicitly or implicitly indicates a target TCI state from the plurality of TCI states, and the same reference signal for quasi-co-location of the demodulation reference signal for the physical downlink shared channel, the demodulation reference signal for the physical downlink control channel, and the channel status information reference signal is a reference signal comprised (or indicated or provided) by the target TCI state.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly indicates the plurality of TCI states, all or part comprised in the first DCI signaling explicitly or implicitly indicates the target TCI state from the plurality of TCI states, and a unified reference signal for updating of quasi-co-location of the demodulation reference signal for the physical downlink shared channel, the demodulation reference signal for the physical downlink control channel, and the channel status information reference signal is a reference signal comprised (or indicated or provided) by the target TCI state.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part comprised in the third information block explicitly or implicitly provides a serving cell and a BWP configured with the plurality of TCI states, all or part comprised in the first DCI signaling explicitly or implicitly indicates the target TCI state from the plurality of TCI states, and the same reference signal for quasi-co-location of the demodulation reference signal for the physical downlink shared channel, the demodulation reference signal for the physical downlink control channel, and the channel status information reference signal is a reference signal comprised (or indicated or provided) by the target TCI state.

As one embodiment, the technical feature "the third information block indicates a same reference signal for quasi-co-location of a demodulation reference signal for a physical downlink shared channel, a demodulation reference signal for a physical downlink control channel, and a channel status information reference signal" comprises the following meaning: all or part of the third information block explicitly or implicitly indicates a unified TCI state reference serving cell and a BWP, the plurality of TCI states are configured in the unified TCI state reference serving cell and the BWP, all or part of the first DCI signaling explicitly or implicitly indicates the target TCI state from the plurality of TCI states, and the same reference signal for quasi-co-location of the demodulation reference signal for the physical downlink shared channel, the demodulation reference signal for the physical downlink control channel, and the channel status information reference signal is a reference signal comprised (or indicated or provided) by the target TCI state.

As one embodiment, the third information block configures a plurality of candidate TCI states for a joint (or unified) TCI state indication.

As one embodiment, a serving cell to which the third information block belongs is different from a serving cell to which the first signal belongs, and the third information block comprises a field (or high-layer parameter) "unifiedTCI-StateRef".

As one embodiment, a PCI (physical cell ID) of a serving cell to which the third information block belongs and a PCI of a serving cell to which the first signal belongs are not equal.

As one embodiment, the third information block is configured per BWP, and a PCI of a serving cell to which a BWP targeted by the third information block belongs and the PCI of the serving cell to which the first signal belongs are not equal.

As one embodiment, the serving cell to which the third information block belongs is the same as the serving cell to which the first signal belongs, and the third information block comprises a field (or high-layer parameter) "dl-OrJointTCI-StateToAddModList".

As one embodiment, the PCI of the serving cell to which the third information block belongs and the PCI of the serving cell to which the first signal belongs are equal.

As one embodiment, the third information block is configured per BWP, and the PCI of the serving cell to which the BWP targeted by the third information block belongs and the PCI of the serving cell to which the first signal belongs are equal.

As one embodiment, the third information block is configured to the first node device.

### Embodiment 6

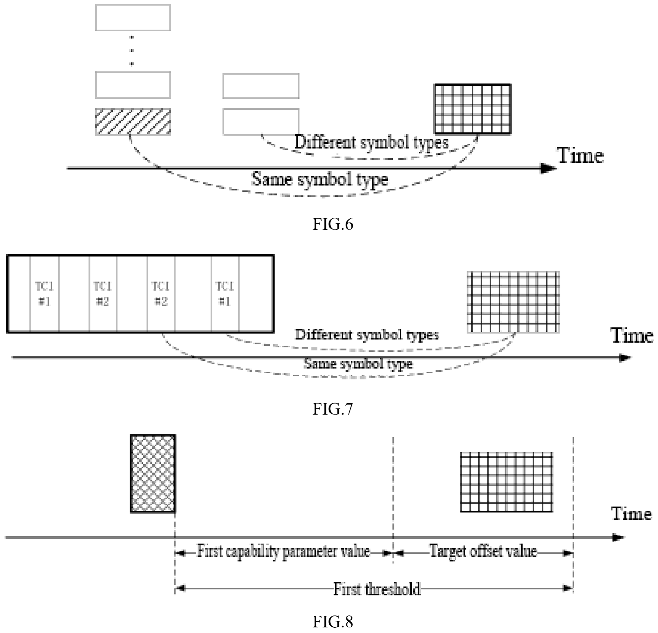

Embodiment 6 illustrates a schematic diagram of a target control resource set according to one embodiment of the present application, as shown in FIG. 6. In FIG. 6, a horizontal axis represents time, each gray-filled rectangular area represents a control resource set in one monitoring occasion, an oblique-line-filled rectangular area represents the target control resource set in one monitoring occasion, and a cross-line-filled rectangular area represents a first signal.

In Embodiment 6, the target control resource set in the present application and the first signal in the present application belong to a same cell, and the target control resource set is a control resource set with a minimum index value that is monitored in a latest symbol of the same symbol type as at least one time domain symbol occupied in a time domain by the first signal.

As one embodiment, the target control resource set is a control resource set with a minimum index value that is monitored in a latest symbol of a same type, which ensures reception performance while solving default beam ambiguity.

As one embodiment, the technical feature "the target control resource set and the first signal belong to a same cell" comprises the following meaning: the target control resource set and the first signal belong to a same serving cell.

As one embodiment, the technical feature "the target control resource set and the first signal belong to the same cell" comprises the following meaning: a frequency domain resource occupied (or mapped) by the target control resource set and a frequency domain resource occupied (or mapped) by the first signal belong to a same active BWP of the same serving cell.

As one embodiment, the technical feature "the target control resource set and the first signal belong to the same cell" comprises the following meaning: the target control resource set and the first signal occupy (or are mapped to) resources of the same cell.

As one embodiment, the technical feature "the target control resource set and the first signal belong to the same cell" comprises the following meaning: the target control resource set and the first signal belong to a same carrier in a frequency domain.

As one embodiment, the technical feature "the target control resource set and the first signal belong to the same cell" comprises the following meaning: the target control resource set and the first signal are synchronized in time and frequency to the same cell.

As one embodiment, the technical feature "the target control resource set and the first signal belong to the same cell" comprises the following meaning: the target control resource set and the first signal are configured in the same cell.

As one embodiment, the technical feature "the target control resource set and the first signal belong to the same cell" comprises the following meaning: the target control resource set and the first signal are configured by a network device of the same cell.

As one embodiment, a cell to which the target control resource set and the first signal belong is a Primary Cell (Pcell). As one subsidiary embodiment of the above embodiment, limiting to the primary cell can simplify a design and reduce standard complexity.

As one embodiment, the cell to which the target control resource set and the first signal belong is a Secondary Cell (Scell). As one subsidiary embodiment of the above embodiment, limiting to the secondary cell can reduce the impact on traditional users.

As one embodiment, the cell to which the target control resource set and the first signal belong can be a primary cell or a secondary cell. As one subsidiary embodiment of the above embodiment, not imposing a limitation on the belonging cell maximizes configuration flexibility.

As one embodiment, the technical feature "the target control resource set is a control resource set with a minimum index value that is monitored in a latest symbol of the same symbol type as at least one time domain symbol occupied in a time domain by the first signal" comprises the following meaning: the target control resource set is a control resource set with a minimum index value (or ID value) that is monitored in a latest slot comprising a symbol of the same symbol type as the at least one time domain symbol occupied in the time domain by the first signal.

As one embodiment, the technical feature "the target control resource set is a control resource set with a minimum index value that is monitored in a latest symbol of the same symbol type as at least one time domain symbol occupied in a time domain by the first signal" comprises the following meaning: the target control resource set is a monitored control resource set with a minimum index value and occupying in the time domain the latest symbol of the same symbol type as the at least one time domain symbol occupied in the time domain by the first signal.

As one embodiment, the technical feature "the target control resource set is a control resource set with a minimum index value that is monitored in a latest symbol of the same symbol type as at least one time domain symbol occupied in a time domain by the first signal" comprises the following meaning: the target control resource set is a monitored control resource set with a minimum index value and occupying in the time domain the latest symbol that is of the same symbol type as the at least one time domain symbol occupied in the time domain by the first signal and is not later than the first signal.

As one embodiment, the technical feature "the target control resource set is a control resource set with a minimum index value that is monitored in a latest symbol of the same symbol type as at least one time domain symbol occupied in a time domain by the first signal" comprises the following meaning: the target control resource set is a control resource set with a minimum index value (or ID value) monitored in a latest slot that comprises a symbol of the same symbol type as at least one time domain symbol occupied in the time domain by the first signal and is not later than the first signal.

As one embodiment, the technical feature "the target control resource set is a control resource set with a minimum index value that is monitored in a latest symbol of the same symbol type as at least one time domain symbol occupied in a time domain by the first signal" comprises the following meaning: the target control resource set is one of a plurality of control resource sets monitored in the latest symbol of the same symbol type as the least one time domain symbol occupied in the time domain by the first signal; and an index value (or ID value) of the target control resource set among the plurality of control resource sets is the minimum. As one subsidiary embodiment of the above embodiment, the plurality of control resource sets all belong to a same active BWP in the frequency domain. As one subsidiary embodiment of the above embodiment, indexes of control resource set pools to which the plurality of control resource sets belong are all equal. As one subsidiary embodiment of the above embodiment, the plurality of control resource sets all belong to a same control resource set pool.

As one embodiment, the technical feature "the target control resource set is a control resource set with a minimum index value that is monitored in a latest symbol of the same symbol type as at least one time domain symbol occupied in a time domain by the first signal" comprises the following meaning: a first type is the symbol type of the at least one time domain symbol occupied in the time domain by the first signal, and the target control resource set is one of the plurality of control resource sets monitored in a latest symbol belonging to the first type; and an index value (or ID value) of the target control resource set among the plurality of control resource sets is the minimum. As one subsidiary embodiment of the above embodiment, the plurality of control resource sets all belong to the same active BWP in the frequency domain. As one subsidiary embodiment of the above embodiment, indexes of control resource set pools to which the plurality of control resource sets belong are all equal. As one subsidiary embodiment of the above embodiment, the plurality of control resource sets all belong to the same control resource set pool.

As one embodiment, the technical feature "the target control resource set is a control resource set with a minimum index value that is monitored in a latest symbol of the same symbol type as at least one time domain symbol occupied in a time domain by the first signal" comprises the following meaning: the first type is the symbol type of the at least one time domain symbol occupied in the time domain by the first signal, and the target control resource set is one of the plurality of control resource sets monitored in a latest slot comprising a symbol of the first type; and an index value (or ID value) of the target control resource set among the plurality of control resource sets is the minimum. As one subsidiary embodiment of the above embodiment, the plurality of control resource sets all belong to the same active BWP in the frequency domain. As one subsidiary embodiment of the above embodiment, indexes of control resource set pools to which the plurality of control resource sets belong are all equal. As one subsidiary embodiment of the above embodiment, the plurality of control resource sets all belong to the same control resource set pool.

As one embodiment, the technical feature "the target control resource set is a control resource set with a minimum index value that is monitored in a latest symbol of the same symbol type as at least one time domain symbol occupied in a time domain by the first signal" comprises the following meaning: the first type is the symbol type of the at least one time domain symbol occupied in the time domain by the first signal, there are monitored control resource sets in the plurality of symbols belonging to the first type, a plurality of monitored control resource sets all occupy in the time domain a latest symbol among the plurality of symbols, the target control resource set is the control resource set with a minimum index value (or ID value) among the plurality of monitored control resource sets. As one subsidiary embodiment of the above embodiment, the plurality of monitored control resource sets all belong to the same active BWP in the frequency domain. As one subsidiary embodiment of the above embodiment, indexes of control resource set pools to which the plurality of monitored control resource sets belong are all equal. As one subsidiary embodiment of the above embodiment, the plurality of monitored control resource sets all belong to the same control resource set pool.

As one embodiment, the technical feature "the target control resource set is a control resource set with a minimum index value that is monitored in a latest symbol of the same symbol type as at least one time domain symbol occupied in a time domain by the first signal" comprises the following meaning: the first type is the symbol type of the at least one time domain symbol occupied in the time domain by the first signal, there are monitored control resource sets in a plurality of slots comprising symbols of the first type, the plurality of monitored control resource sets all occupy at least 1 symbol in a latest slot of the plurality of slots in the time domain, and the target control resource set is a control resource set with a minimum index value (or ID value) among the plurality of monitored control resource sets. As one subsidiary embodiment of the above embodiment, the plurality of monitored control resource sets all belong to the same active BWP in the frequency domain. As one subsidiary embodiment of the above embodiment, indexes of control resource set pools to which the plurality of monitored control resource sets belong are all equal. As one subsidiary embodiment of the above embodiment, the plurality of monitored control resource sets all belong to the same control resource set pool.

### Embodiment 7

Embodiment 7 illustrates a schematic diagram of a first signal according to one embodiment of the present application, as shown in FIG. 7. In FIG. 7, a horizontal axis represents time, a thick-line unfilled rectangular area represents a target control resource set, and a cross-line filled rectangular area represents the first signal.

In Embodiment 7, the first signal in the present application and a reference signal for a TCI state among a plurality of TCI states of the target control resource set are quasi-co-located, the TCI state being associated with a symbol type of at least one time domain symbol occupied in a time domain by the first signal.

As one embodiment, an ambiguity problem of a default TCI state when a search space associated with a control resource set is distributed on symbols of a plurality of types is resolved, further improving reception quality.

As one embodiment, a first information block is used for indicating that there is more than 1 TCI state for the target control resource set.

As one embodiment, configuration signaling of a control resource set is used for indicating that there is more than 1 TCI state for the target control resource set.

As one embodiment, the number of TCI states for the target control resource set is equal to 2.

As one embodiment, the number of TCI states for the target control resource set is greater than 2.

As one embodiment, the number of TCI states for the target control resource set is configurable.

As one embodiment, an upper limit of the number of TCI states for the target control resource set is equal to 64.

As one embodiment, the upper limit of the number of TCI states for the target control resource set is configurable. As one subsidiary embodiment of the above embodiment, benefits of doing so are that the number of TCI states can be increased when SBFD is supported, better supporting antenna-technology-based interference cancellation under SBFD.

As one embodiment, a plurality of TCI states for the target control resource set are a plurality of TCI states with which the target control resource set is configured.

As one embodiment, the plurality of TCI states for the target control resource set are a plurality of TCI states applied by the target control resource set.

As one embodiment, the plurality of TCI states for the target control resource set are a plurality of TCI states indicated for the target control resource set.

As one embodiment, the plurality of TCI states for the target control resource set are a plurality of TCI states activated for the target control resource set.

As one embodiment, the plurality of TCI states for the target control resource set are a plurality of TCI states in which the target control resource set is activated by a MAC CE (Medium Access Control Control Element).

As one embodiment, the target control resource set is configured with W1 TCI states by RRC layer signaling (or parameters), W1 is a positive integer greater than 1, and the plurality of TCI states for the target control resource set are a plurality of TCI states indicated (or activated) from the W1 TCI states.

As one embodiment, any one of the plurality of TCI states for the target control resource set is used for providing a QCL relationship between a DMRS of a PDCCH and a downlink reference signal in one reference signal set.

As one embodiment, any one of the plurality of TCI states for the target control resource set comprises a reference signal and a QCL type.

As one embodiment, any one of the plurality of TCI states for the target control resource set is one TCI state in a TCI state list configured (or indicated or provided) by one piece of RRC layer signaling (or one parameter).

As one embodiment, any one of the plurality of TCI states for the target control resource set belongs to one subset of a plurality of TCI states defined by configuration signaling of a PDSCH.

As one embodiment, any one of the plurality of TCI states for the target control resource set belongs to the subset of the plurality of TCI states defined by configuration signaling of the PDSCH, and the configuration signaling of the PDSCH and the target control resource set correspond to a same serving cell and a same downlink BWP.

As one embodiment, a TCI state associated with a symbol type of at least one time domain symbol occupied in the time domain by the first signal is a TCI state corresponding to (or being mapped by) the symbol type of at least one time domain symbol occupied in the time domain by the first signal.

As one embodiment, a TCI state associated with a symbol type of at least one time domain symbol occupied in the time domain by the first signal is at least 1 TCI state configured (or indicated or provided) for the symbol type of at least one time domain symbol occupied in the time domain by the first signal.

As one embodiment, a symbol type of at least one time domain symbol occupied in the time domain by the first signal is a first type, the first type is one of a plurality of symbol types, a symbol of any one of the plurality of symbol types is associated to at least 1 TCI state, and a TCI state associated with the symbol type of the at least one time domain symbol occupied in the time domain by the first signal is at least 1 TCI state associated with a symbol of the first type. As one subsidiary embodiment of the above embodiment, a mutual association relationship (or correspondence relationship or mapping relationship) between any one of the plurality of symbol types and a TCI state is predefined. As one subsidiary embodiment of the above embodiment, the mutual association relationship (or correspondence relationship or mapping relationship) between any one of the plurality of symbol types and a TCI state is configured.

As one embodiment, only 1 TCI state is associated with a symbol type of at least one time domain symbol occupied in the time domain by the first signal.

As one embodiment, a plurality of TCI states are associated with a symbol type of at least one time domain symbol occupied in the time domain by the first signal.

As one embodiment, the number of TCI states associated with a symbol type of at least one time domain symbol occupied in the time domain by the first signal is configurable.

As one embodiment, the number of TCI states associated with a symbol type of at least one time domain symbol occupied in the time domain by the first signal is related to whether single frequency network (SFN) transmission is configured.

As one embodiment, the number of TCI states associated with a symbol type of at least one time domain symbol occupied in the time domain by the first signal is related to a configured single frequency network scheme.

As one embodiment, the technical feature "the first signal and a reference signal for a TCI state among a plurality of TCI states of the target control resource set are quasi-co-located, the TCI state being associated with a symbol type of at least one time domain symbol occupied in a time domain by the first signal" comprises the following meaning: a demodulation reference signal of the first signal and a reference signal comprised in (or indicated by or provided by) a TCI state among the plurality of TCI states for the target control resource set are quasi-co-located, the TCI state being associated with the symbol type of the at least one time domain symbol occupied in the time domain by the first signal.

As one embodiment, the technical feature "the first signal and a reference signal for a TCI state among a plurality of TCI states of the target control resource set are quasi-co-located, the TCI state being associated with a symbol type of at least one time domain symbol occupied in a time domain by the first signal" comprises the following meaning: the first signal and a reference signal comprised in (or indicated by or provided by) a TCI state among the plurality of TCI states for the target control resource set are quasi-co-located, the TCI state being associated with the symbol type of the at least one time domain symbol occupied in the time domain by the first signal.

As one embodiment, the technical feature "the first signal and a reference signal for a TCI state among a plurality of TCI states of the target control resource set are quasi-co-located, the TCI state being associated with a symbol type of at least one time domain symbol occupied in a time domain by the first signal" comprises the following meaning: the first signal and a reference signal of 1 TCI state among the plurality of TCI states for the target control resource set are quasi-co-located, the 1 TCI state being associated with the symbol type of the at least one time domain symbol occupied in the time domain by the first signal.

As one embodiment, the technical feature "the first signal and a reference signal for a TCI state among a plurality of TCI states of the target control resource set are quasi-co-located, the TCI state being associated with a symbol type of at least one time domain symbol occupied in a time domain by the first signal" comprises the following meaning: the first signal and a reference signal of the first TCI state among the plurality of TCI states for the target control resource set are quasi-co-located, the first TCI state being associated with the symbol type of the at least one time domain symbol occupied in the time domain by the first signal.

As one embodiment, the technical feature "the first signal and a reference signal for a TCI state among a plurality of TCI states of the target control resource set are quasi-co-located, the TCI state being associated with a symbol type of at least one time domain symbol occupied in a time domain by the first signal" comprises the following meaning: the first signal and a reference signal of a TCI state among the plurality of TCI states for the target control resource set are quasi-co-located with respect to corresponding QCL parameters, the TCI state being associated with the symbol type of the at least one time domain symbol occupied in the time domain by the first signal.

### Embodiment 8

Embodiment 8 illustrates a schematic diagram of a target offset value according to one embodiment of the present application, as shown in FIG. 8. In FIG. 8, a horizontal axis represents time, a rectangular area filled with intersecting lines represents first DCI signaling, a rectangular area filled with cross lines represents a first signal, and a first threshold depends on a first capability parameter value and the target offset value.

In Embodiment 8, a second information block in the present application indicates the first capability parameter value, and the first threshold in the present application depends on the first capability parameter value and the target offset value; and the target offset value depends on at least one of a first information block or the second information block in the present application.

As one embodiment, by associating the first threshold with the target offset value, the switching time of a symbol type is considered when defining a delay design of a default TCI state, ensuring signal reception and reducing user implementation complexity.

As one embodiment, the first capability parameter value is a value of "timeDurationForQCL".

As one embodiment, the first capability parameter value is a value of "timeDurationForQCL-v1910".

As one embodiment, the first capability parameter value is a value of "timeDurationForQCL-r19".

As one embodiment, the first capability parameter value is a value of "beamSwitchTiming".

As one embodiment, the first capability parameter value is a value of "beamSwitchTiming-v1910".

As one embodiment, the first capability parameter value is a value of "beamSwitchTiming-r19".

As one embodiment, a dedicated QCL delay duration or beam switching time is introduced for SBFD of R19, enhancing flexibility and reducing user implementation complexity.

As one embodiment, the first capability parameter value is per band.

As one embodiment, the first capability parameter value is per feature set.

As one embodiment, the first capability parameter value is only applicable to (supporting) a frequency range 2 (FR2).

As one embodiment, the target offset value is a value of one parameter comprised in the first threshold.

As one embodiment, the target offset value is an offset value or compensation value for the first threshold across symbol types.

As one embodiment, the target offset value is an offset value or compensation value for the first threshold between an SBFD symbol and a non-SBFD symbol.

As one embodiment, the target offset value is expressed by the number of symbols.

As one embodiment, the target offset value is expressed by an absolute time.

As one embodiment, the target offset value is expressed by the number of PDCCH symbols carrying the first DCI signaling. As one subsidiary embodiment of the above embodiment, benefits of doing so are that calculation is simple.

As one embodiment, the target offset value is expressed by the number of symbols of the first signal. As one subsidiary embodiment of the above embodiment, the benefits of doing so are to ensure alignment at the first signal, and improve flexibility.

As one embodiment, the target offset value is per user equipment (UE). As one subsidiary embodiment of the above embodiment, the target offset value is signaled per user equipment, which can reduce standard complexity.

As one embodiment, the target offset value is per band. As one subsidiary embodiment of the above embodiment, the target offset value is signaled per band, which can optimize for different bands, and simplify product implementation.

As one embodiment, the target offset value is per band combination. As one subsidiary embodiment of the above embodiment, the target offset value is signaled per band combination, which can optimize for different band combinations, and achieve balance between standard complexity and product implementation complexity.

As one embodiment, the target offset value is per feature set. As one subsidiary embodiment of the above embodiment, the target offset value is signaled per feature set, which can optimize for features, and reduce signaling overhead.

As one embodiment, the target offset value is per feature set per component carrier. As one subsidiary embodiment of the above embodiment, the target offset value is signaled per feature set per component carrier, which can improve flexibility, reduce product implementation complexity and meanwhile reduce signaling overhead.

As one embodiment, the target offset value has different parameter values between FDD (Frequency Division Duplexing) and TDD (Time Division Duplexing).

As one embodiment, the target offset value is only applied to TDD.

As one embodiment, the target offset value is only applied to the FR2.

As one embodiment, the target offset value has different parameter values among different frequency ranges (FRs). As one subsidiary embodiment of the above embodiment, there are different parameter values for different frequency ranges, which can optimize product implementation for frequency ranges, and improve flexibility.

As one embodiment, the target offset value has identical parameter values among different frequency ranges. As one subsidiary embodiment of the above embodiment, there are identical parameter values for different frequency ranges, which can support a unified design, and reduce standard complexity.

As one embodiment, the technical feature "the first threshold depends on the first capability parameter value and the target offset value" comprises the following meaning: the first threshold is equal to a sum of the first capability parameter value and the target offset value.

As one embodiment, the technical feature "the first threshold depends on the first capability parameter value and the target offset value" comprises the following meaning: the first threshold is related to both the first capability parameter value and the target offset value.

As one embodiment, the technical feature "the first threshold depends on the first capability parameter value and the target offset value" comprises the following meaning: the first threshold is linearly correlated with the first capability parameter value, and the first threshold is linearly correlated with the target offset value.

As one embodiment, the technical feature "the first threshold depends on the first capability parameter value and the target offset value" comprises the following meaning: the first capability parameter value and the target offset value are used together for determining (or calculating) the first threshold.

As one embodiment, the technical feature "the first threshold depends on the first capability parameter value and the target offset value" comprises the following meaning: parameters for calculating the first threshold comprise the first capability parameter value and the target offset value.

As one embodiment, the technical feature "the first threshold depends on the first capability parameter value and the target offset value" comprises the following meaning: the first threshold is linearly correlated with the first capability parameter value, and the first threshold is linearly correlated with a product of the target offset value and one parameter related to a subcarrier spacing.

As one embodiment, the target offset value is related to the subcarrier spacing.

As one embodiment, the target offset value is related to whether an SBFD symbol schedules a non-SBFD symbol or a non-SBFD symbol schedules an SBFD symbol.

As one embodiment, the target threshold is related to whether a symbol type occupied by the first DCI signaling in a time domain is the same as a symbol type occupied in the time domain by the first signal.

As one embodiment, the target offset value is greater than 0.

As one embodiment, the target offset value is not smaller than 0.

As one embodiment, when there is no symbol type transition between the first DCI signaling and the first signal, the target offset value is equal to 0; and when there is symbol type transition between the first DCI signaling and the first signal, the target offset value is greater than 0.

As one embodiment, when the symbol type occupied by the first DCI signaling in the time domain is the same as the symbol type occupied in the time domain by the first signal, the target offset value is equal to 0; and when the symbol type occupied by the first DCI signaling in the time domain is different from the symbol type occupied in the time domain by the first signal, the target offset value is greater than 0.

As one embodiment, the technical feature "the target offset value depends on at least one of a first information block or the second information block" comprises the following meaning: the target offset value depends on the first information block and the second information block.

As one embodiment, the technical feature "the target offset value depends on at least one of a first information block or the second information block" comprises the following meaning: the target offset value depends on one of the first information block or the second information block.

As one embodiment, the technical feature "the target offset value depends on at least one of a first information block or the second information block" comprises the following meaning: at least one of the first information block or the second information block explicitly or implicitly indicates the target offset value.

As one embodiment, the technical feature "the target offset value depends on at least one of a first information block or the second information block" comprises the following meaning: all or part comprised in the second information block explicitly or implicitly indicates (or reports) the target offset value.

As one embodiment, the technical feature "the target offset value depends on at least one of a first information block or the second information block" comprises the following meaning: all or part comprised in the second information block explicitly or implicitly indicates (or reports) a value range of the target offset value.

As one embodiment, the technical feature "the target offset value depends on at least one of a first information block or the second information block" comprises the following meaning: all or part comprised in the second information block explicitly or implicitly indicates (or reports) a lower limit value (or a minimum possible value) of the target offset value.

As one embodiment, the technical feature "the target offset value depends on at least one of a first information block or the second information block" comprises the following meaning: all or part comprised in the second information block explicitly or implicitly indicates (or reports) a plurality of candidate values of the target offset value.

As one embodiment, the technical feature "the target offset value depends on at least one of a first information block or the second information block" comprises the following meaning: all or part comprised in the first information block explicitly or implicitly indicates the target offset value from the plurality of candidate values.

As one embodiment, the technical feature "the target offset value depends on at least one of a first information block or the second information block" comprises the following meaning: all or part comprised in the first information block explicitly or implicitly indicates a value of one intermediate parameter, and the value of the intermediate parameter is used for calculating the target offset value.

As one embodiment, the technical feature "the target offset value depends on at least one of a first information block or the second information block" comprises the following meaning: all or part comprised in the second information block explicitly or implicitly indicates (or reports) the value range of the target offset value, and all or part comprised in the first information block explicitly or implicitly indicates the target offset value from the value range of the target offset value.

As one embodiment, the technical feature "the target offset value depends on at least one of a first information block or the second information block" comprises the following meaning: all or part comprised in the second information block explicitly or implicitly indicates (or reports) the lower limit value (or the minimum possible value) of the target offset value, and all or part comprised in the first information block explicitly or implicitly indicates the target offset value from candidate values not smaller than the lower limit value of the target offset value.

As one embodiment, the technical feature "the target offset value depends on at least one of a first information block or the second information block" comprises the following meaning: all or part comprised in the second information block explicitly or implicitly indicates (or reports) the plurality of candidate values of the target offset value, and all or part comprised in the first information block explicitly or implicitly indicates the target offset value from the plurality of candidate values of the target offset value.

As one embodiment, the target offset value is a BOOLEAN parameter value, or the target offset value is an integer, or the target offset value is one element in a list or combination, or the target offset value is one of ENUMERATED parameter values, or the target offset value is one of CHOICE parameter values, or the target offset value is one of SEQUENCE parameter values.

### Embodiment 9

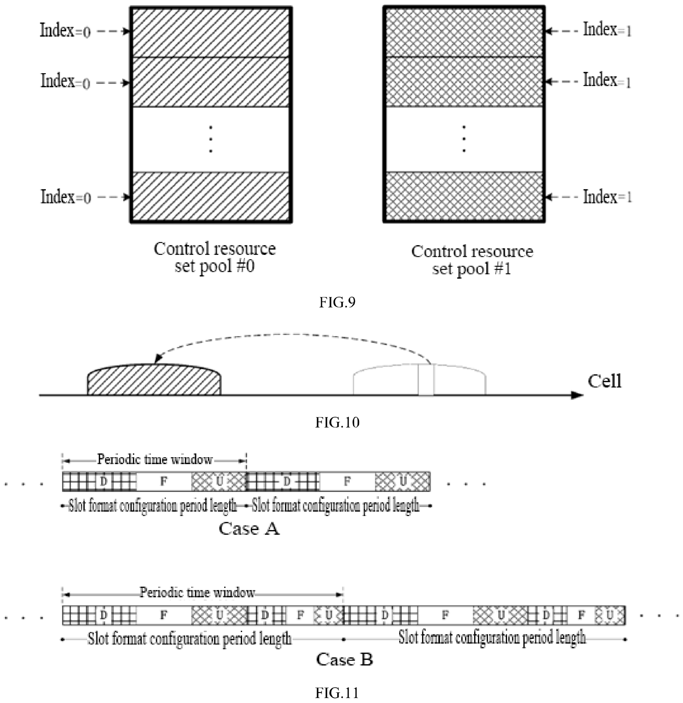

Embodiment 9 illustrates a schematic diagram of a control resource set pool according to one embodiment of the present application, as shown in FIG. 9. In FIG. 9, a thick-line box rectangular area on the left represents a control resource set pool 0, and each rectangular area filled with diagonal lines represents one control resource set configured with an index value equal to 0; and a thick-line box rectangular area on the right represents a control resource set pool 1, and each rectangular area filled with intersecting lines represents one control resource set configured with an index value equal to 1.

In Embodiment 9, an index value of a control resource set pool to which a target control resource set in the present application belongs is equal to an index value of a control resource set pool to which a PDCCH carrying first DCI signaling in the present application belongs.

As one embodiment, the target control resource set belongs to one control resource set pool (CORESET pool).

As one embodiment, the target control resource set is configured (or indicated or provided) with an index value of one control resource set pool.

As one embodiment, the control resource set pool to which the target control resource set belongs is a control resource set pool with which the target control resource set is configured (or indicated or provided).

As one embodiment, the control resource set pool to which the target control resource set belongs is a control resource set pool indexed by a control resource set pool index value with which the target control resource set is configured (or indicated or provided).

As one embodiment, the index value of the control resource set pool to which the target control resource set belongs is a control resource set pool index value with which the target control resource set is configured (or indicated or provided).

As one embodiment, the index value of the control resource set pool to which the target control resource set belongs is a control resource set pool index value configured (or indicated or provided) for the target control resource set.

As one embodiment, the index value of the control resource set pool to which the target control resource set belongs is a non-negative integer.

As one embodiment, the index value of the control resource set pool to which the target control resource set belongs is equal to 0 or 1.

As one embodiment, the PDCCH carrying the first DCI signaling is a PDCCH to which the first DCI signaling is mapped.

As one embodiment, the PDCCH carrying the first DCI signaling is a PDCCH generated by the first DCI signaling.

As one embodiment, the PDCCH carrying the first DCI signaling is a PDCCH where comprised information bits comprise the first DCI signaling.

As one embodiment, the PDCCH carrying the first DCI signaling is a PDCCH where payload comprises the first DCI signaling.

As one embodiment, the control resource set pool to which the PDCCH carrying the first DCI signaling belongs is a control resource set pool to which a control resource set to which the PDCCH carrying the first DCI signaling belongs belongs.

As one embodiment, the control resource set pool to which the PDCCH carrying the first DCI signaling belongs is a control resource set pool to which a control resource set comprising the PDCCH carrying the first DCI signaling belongs.

As one embodiment, the control resource set pool to which the PDCCH carrying the first DCI signaling belongs is a control resource set pool to which a control resource set to which a CCE occupied by the PDCCH carrying the first DCI signaling belongs belongs.

As one embodiment, the control resource set pool to which the PDCCH carrying the first DCI signaling belongs is a control resource set pool with which a control resource set to which the PDCCH carrying the first DCI signaling belongs is configured (or indicated or provided).

As one embodiment, the control resource set pool to which the PDCCH carrying the first DCI signaling belongs is a control resource set pool indexed by a control resource set pool index value with which the control resource set to which the PDCCH carrying the first DCI signaling belongs is configured (or indicated or provided).

As one embodiment, the index value of the control resource set pool to which the PDCCH carrying the first DCI signaling belongs is the control resource set pool index value with which the control resource set to which the PDCCH carrying the first DCI signaling belongs is configured (or indicated or provided).

As one embodiment, the index value of the control resource set pool to which the PDCCH carrying the first DCI signaling belongs is a control resource set pool index value configured (or indicated or provided) for the control resource set to which the PDCCH carrying the first DCI signaling belongs.

As one embodiment, the index value of the control resource set pool to which the target control resource set belongs is the control resource set pool index value configured (or indicated or provided) for the target control resource set.

As one embodiment, the index value of the control resource set pool to which the PDCCH carrying the first DCI signaling belongs is a non-negative integer.

As one embodiment, the index value of the control resource set pool to which the PDCCH carrying the first DCI signaling belongs is equal to 0 or 1.

As one embodiment, when one control resource set is not provided with a control resource set pool index value, an index value of a control resource set pool to which this control resource set belongs is equal to 0.

As one embodiment, a default value of an index value of a control resource set pool of one control resource set is equal to 0.

### Embodiment 10

Embodiment 10 illustrates a schematic diagram of a relationship between a serving cell associated with a TCI state with which a first signal is configured and a serving cell to which the first signal belongs according to one embodiment of the present application, as shown in FIG. 10. In FIG. 10, each area with an arc-shaped top represents one cell, the arc-shaped top area filled with diagonal lines represents a cell associated with a TCI state with which the first signal is configured, the unfilled arc-shaped top area represents the serving cell to which the first signal belongs, and an area filled with intersecting lines represents the first signal.

In Embodiment 10, a third information block in the present application indicates a same reference signal for quasi-co-location of a demodulation reference signal for a physical downlink shared channel, a demodulation reference signal for a physical downlink control channel and a channel status information reference signal; and a PCI associated with a TCI state with which the first signal is configured in the present application is different from a PCI of a serving cell to which the first signal belongs.

As one embodiment, the TCI state with which the first signal is configured is a TCI state indicated for the first signal.

As one embodiment, the TCI state with which the first signal is configured is one of a plurality of TCI states provided by the third information block.

As one embodiment, the TCI state with which the first signal is configured is one of a plurality of TCI states configured in a serving cell and a BWP indicated by the third information block.

As one embodiment, the TCI state with which the first signal is configured is a TCI state indicated by first DCI signaling.

As one embodiment, the TCI state with which the first signal is configured is a joint (or unified) TCI state indicated by the first DCI signaling.

As one embodiment, a TCI state of the first signal is different from the TCI state with which the first signal is configured.

As one embodiment, the PCI associated with the TCI state with which the first signal is configured is a PCI associated with the TCI state indicated for the first signal.

As one embodiment, the PCI associated with the TCI state with which the first signal is configured is a PCI corresponding to the TCI state with which the first signal is configured.

As one embodiment, the PCI associated with the TCI state with which the first signal is configured is a PCI of a serving cell that provides (or configures or indicates) the TCI state with which the first signal is configured.

As one embodiment, the PCI associated with the TCI state with which the first signal is configured is a PCI of a serving cell that provides (or configures or indicates) a plurality of TCI states comprising the TCI state with which the first signal is configured.

As one embodiment, the PCI associated with the TCI state with which the first signal is configured is a PCI of a serving cell to which higher-layer signaling (or a higher-layer parameter) that provides (or configures or indicates) the plurality of TCI states comprising the TCI state with which the first signal is configured belongs (or corresponds).

As one embodiment, the PCI associated with the TCI state with which the first signal is configured is a PCI of a serving cell to which a higher-layer parameter "dl-OrJointTCI-StateToAddModList" that provides (or configures or indicates) the plurality of TCI states comprising the TCI state with which the first signal is configured belongs (or corresponds).

As one embodiment, the serving cell to which the first signal belongs is a serving cell to which a frequency domain resource occupied (or mapped) by the first signal belongs.

As one embodiment, the serving cell to which the first signal belongs is a serving cell corresponding to a carrier to which a frequency domain resource occupied (or mapped) by the first signal belongs.

As one embodiment, the serving cell to which the first signal belongs is a serving cell to which a BWP to which a frequency domain resource occupied (or mapped) by the first signal belongs belongs.

As one embodiment, the serving cell to which the first signal belongs is a serving cell to which the first signal is synchronized.

As one embodiment, the serving cell to which the first signal belongs is a serving cell for configuring the first signal.

As one embodiment, the serving cell associated with the TCI state with which the first signal is configured is different from the serving cell to which the first signal belongs.

### Embodiment 11

Embodiment 11 illustrates a schematic diagram of a periodic time window according to one embodiment of the present application, as shown in FIG. 11. In FIG. 11, in case A and case B, each rectangle filled with cross lines represents at least one symbol indicated as a downlink (D) by a TDD uplink/downlink configuration, each rectangle filled with intersecting lines represents at least one symbol indicated as an uplink (U) by the TDD uplink/downlink configuration, and each unfilled rectangle represents at least one flexible (F) time domain symbol; in case A, only a distribution pattern of one slot format is comprised in one periodic time window; and in case B, a distribution pattern of two slot formats is comprised in one periodic time window.

In Embodiment 11, a first information block in the present application indicates a first subband, and the first subband comprises at least one resource block; the first information block indicates a symbol type of at least 1 symbol from the periodic time window, the periodic time window comprises a plurality of consecutive symbols, and a time length of the periodic time window is related to a slot format configuration period length; and a first type is a symbol type of at least 1 symbol indicated by the first information block from the periodic time window, and a symbol indicated as a downlink by the TDD uplink/downlink configuration and overlapping with a symbol of the first type is used for uplink transmission in the first subband.

As one embodiment, the time length of the periodic time window is related to the slot format configuration period length, reducing configuration signaling overhead while ensuring configuration flexibility.

As one embodiment, the first subband is a full duplex subband.

As one embodiment, the first subband is a full duplex subband for an uplink.

As one embodiment, the first subband is one uplink SBFD subband.

As one embodiment, the first subband is a subband that can be used for uplink transmission in downlink symbols or flexible symbols.

As one embodiment, the first subband comprises a guard frequency domain resource.

As one embodiment, the first subband does not comprise a guard frequency domain resource.

As one embodiment, the first subband comprises consecutive frequency domain resources.

As one embodiment, one uplink BWP comprises all or part of frequency domain resources in the first subband. As one subsidiary embodiment of the above embodiment, the first subband belongs to the uplink BWP, which can reuse an existing design to the maximum and reduce design complexity.

As one embodiment, one uplink active BWP comprises all or part of frequency domain resources in the first subband. As one subsidiary embodiment of the above embodiment, the uplink active BWP comprises part of resources in the first subband, which can support carrier-level subband configuration and increase flexibility.

As one embodiment, in one symbol, there are overlapping frequency domain resources between the first subband and the active uplink BWP.

As one embodiment, in one symbol, there are no overlapping frequency domain resources between the first subband and the active uplink BWP.

As one embodiment, boundaries of RBs (Resource Blocks) comprised in the first subband are aligned with boundaries of RBs in an uplink BWP. As one subsidiary embodiment of the above embodiment, uplink resource fragmentation is avoided and coverage is improved.

As one embodiment, the first subband is per numerology or per subcarrier spacing.

As one embodiment, the first subband is per resource grid. As one subsidiary embodiment of the above embodiment, the subband is configured per grid, which improves configuration flexibility.

As one embodiment, the first subband is per BWP. As one subsidiary embodiment of the above embodiment, the subband is configured per BWP, which ensures compatibility and reduces standard complexity.

As one embodiment, boundaries of RBs comprised in the first subband are aligned with boundaries of RBs in a downlink BWP. As one subsidiary embodiment of the above embodiment, downlink resource fragmentation is avoided and scheduling flexibility is ensured.

As one embodiment, the technical feature "a first information block indicates a first subband" comprises the following meaning: all or part comprised in the first information block explicitly or implicitly indicates the first subband.

As one embodiment, the technical feature "a first information block indicates a first subband" comprises the following meaning: all or part comprised in the first information block explicitly or implicitly indicates a start RB (or an RB with a lowest index) of the first subband.

As one embodiment, the technical feature "a first information block indicates a first subband" comprises the following meaning: all or part comprised in the first information block explicitly or implicitly indicates the number of RBs comprised in the first subband.

As one embodiment, the technical feature "a first information block indicates a first subband" comprises the following meaning: all or part comprised in the first information block explicitly or implicitly indicates an RIV (resource indicator value) corresponding to the first subband.

As one embodiment, the technical feature "a first information block indicates a first subband" comprises the following meaning: all or part comprised in the first information block explicitly or implicitly indicates the RIV corresponding to the first subband, and the start RB of the first subband and the number of consecutive RBs comprised are used for generating the corresponding RIV.

As one embodiment, the technical feature "a first information block indicates a first subband" comprises the following meaning: all or part comprised in the first information block explicitly or implicitly indicates an SLIV (start and length indicator value) corresponding to the first subband.

As one embodiment, the technical feature "a first information block indicates a first subband" comprises the following meaning: all or part comprised in the first information block explicitly or implicitly indicates the SLIV corresponding to the first subband, and the start RB of the first subband and the number of consecutive RBs comprised are used for generating the corresponding SLIV.

As one embodiment, the technical feature "a first information block indicates a first subband" comprises the following meaning: all or part comprised in the first information block explicitly or implicitly indicates at least one CRB (common resource block) that is for one subcarrier spacing and is comprised in the first subband.

As one embodiment, the technical feature "a first information block indicates a first subband" comprises the following meaning: all or part comprised in the first information block explicitly or implicitly indicates the number of CRBs spaced between a lowest-indexed CRB comprised in the first subband and a point A, and the number of consecutive CRBs comprised in the first subband.

As one embodiment, the technical feature "a first information block indicates a first subband" comprises the following meaning: all or part comprised in the first information block explicitly or implicitly indicates the number of CRBs that are for a reference subcarrier spacing and are spaced between the lowest-indexed CRB for the reference subcarrier spacing comprised in the first subband and the point A and the number of consecutive CRBs that are for the reference subcarrier spacing and are comprised in the first subband. As one subsidiary embodiment of the above embodiment, the reference subcarrier spacing is equal to a subcarrier spacing in one uplink resource grid; and benefits of doing so comprise avoiding resource fragmentation. As one subsidiary embodiment of the above embodiment, the reference subcarrier spacing is equal to a subcarrier spacing in one downlink resource grid, and the benefits of doing so are to improve scheduling flexibility. As one subsidiary embodiment of the above embodiment, the reference subcarrier spacing is related to a frequency range (FR). As one subsidiary embodiment of the above embodiment, the reference subcarrier spacing is predefined or configured. As one subsidiary embodiment of the above embodiment, the reference subcarrier spacing is a maximum value among subcarrier spacings respectively targeted by a plurality of configured uplink resource grids; and the benefits of doing so are to ensure alignment with uplink resources. As one subsidiary embodiment of the above embodiment, the reference subcarrier spacing is a maximum value among subcarrier spacings respectively targeted by a plurality of configured downlink resource grids; and the benefits of doing so are to ensure alignment with downlink resources. As one subsidiary embodiment of the above embodiment, the reference subcarrier spacing is a maximum value among subcarrier spacings respectively targeted by all configured resource grids; and the benefits of doing so are to ensure alignment with both uplink and downlink resources.

As one embodiment, the technical feature "a first information block indicates a first subband" comprises the following meaning: the first information block respectively indicates M1 subbands from M1 resource grids, M1 is a positive integer greater than 1, and the first subband is one of the M1 subbands. As one subsidiary embodiment of the above embodiment, the M1 resource grids are respectively for M1 subcarrier spacings, and the first subband is a subband among the M1 subbands corresponding to a first subcarrier spacing. As one subsidiary embodiment of the above embodiment, the M1 resource grids are M1 uplink resource grids; and the benefits of doing so are to avoid uplink resource segmentation and meanwhile not increase signaling overhead. As one subsidiary embodiment of the above embodiment, the M1 resource grids are M1 downlink resource grids; and the benefits of doing so are to avoid downlink resource segmentation and meanwhile not increase signaling overhead. As one subsidiary embodiment of the above embodiment, the M1 resource grids comprise both uplink resource grids and downlink resource grids; and the benefits of doing so are that both uplink and downlink resource assignment are considered simultaneously, but some signaling overhead will be increased. As one subsidiary embodiment of the above embodiment, the M1 resource grids are configured.

As one embodiment, the first information block is used for determining the periodic time window.

As one embodiment, the periodic time window is one slot configuration period.

As one embodiment, the periodic time window is aligned with one slot configuration period.

As one embodiment, the periodic time window comprises a plurality of consecutive slot configuration periods.

As one embodiment, the first information block is used for determining the number of slot configuration periods comprised in the periodic time window.

As one embodiment, the first information block is used for determining a start position of the periodic time window.

As one embodiment, the first information block is used for determining a time length of the periodic time window.

As one embodiment, the periodic time window is any time window in periodically appearing time windows.

As one embodiment, the periodic time window is one time window in periodically appearing time windows.

As one embodiment, the start position of the periodic time window is predefined or is configurable.

As one embodiment, a unit of the time length of the periodic time window is in milliseconds.

As one embodiment, the time length of the periodic time window is expressed by the number of slots or the number of symbols.

As one embodiment, the time length of the periodic time window is expressed by the number of slots or the number of symbols corresponding to one reference subcarrier spacing. As one subsidiary embodiment of the above embodiment, the TDD uplink/downlink configuration is used for determining the reference subcarrier spacing. As one subsidiary embodiment of the above embodiment, the first information block is used for determining the reference subcarrier spacing; and the benefits of doing so are to improve flexibility. As one subsidiary embodiment of the above embodiment, the reference subcarrier spacing is predefined or is configurable. As one subsidiary embodiment of the above embodiment, the reference subcarrier spacing is equal to a subcarrier spacing adopted by a slot format configuration.

As one embodiment, the technical feature "the first information block indicates a symbol type of at least 1 symbol from the periodic time window" comprises the following meaning: all or part comprised in the first information block explicitly or implicitly indicates the symbol type of at least 1 symbol from the periodic time window.

As one embodiment, the technical feature of "the first information block indicates a symbol type of at least 1 symbol from the periodic time window" comprises the following meaning: all or part comprised in the first information block is used for explicitly or implicitly indicating whether at least 1 symbol is a symbol of the first type.

As one embodiment, the technical feature "the first information block indicates a symbol type of at least 1 symbol from the periodic time window" comprises the following meaning: all or part comprised in the first information block is used for explicitly or implicitly indicating whether at least 1 symbol is applicable to or is associated with or corresponds to or is for the first subband.

As one embodiment, the technical feature "the first information block indicates a symbol type of at least 1 symbol from the periodic time window" comprises the following meaning: all or part comprised in the first information block is used for explicitly or implicitly indicating, from the periodic time window, whether at least 1 symbol is an SBFD symbol or a non-SBFD symbol.

As one embodiment, the technical feature "the first information block indicates a symbol type of at least 1 symbol from the periodic time window" comprises the following meaning: all or part comprised in the first information block is used for explicitly or implicitly indicating, from the periodic time window, symbols belonging to the first type.

As one embodiment, the technical feature "the first information block indicates a symbol type of at least 1 symbol from the periodic time window" comprises the following meaning: the first information block comprises one bitmap, any bit in the bitmap corresponds to one symbol in the periodic time window, a symbol in the periodic time window corresponding to a bit with a bit value equal to "1" in the bitmap is a symbol of the first type, and a symbol in the periodic time window corresponding to a bit with a bit value equal to "0" in the bitmap is a symbol of a type other than the first type. As one subsidiary embodiment of the above embodiment, a link direction of the symbol in the periodic time window corresponding to the bit with the bit value equal to "0" in the bitmap is provided by "tdd-UL-DL-ConfigCommon" or "tdd-UL-DL-ConfigDedicated". As one subsidiary embodiment of the above embodiment, the symbol in the periodic time window corresponding to the bit with the bit value equal to "0" in the bitmap is a downlink symbol or a flexible symbol. As one subsidiary embodiment of the above embodiment, any bit in the bitmap corresponds to a symbol in the periodic time window, that is indicated as a downlink symbol or a flexible symbol by "tdd-UL-DL-ConfigCommon" or "tdd-UL-DL-ConfigDedicated". As one subsidiary embodiment of the above embodiment, the number of bits comprised in the bitmap is equal to the number of symbols comprised in the periodic time window. As one subsidiary embodiment of the above embodiment, the number of the bits comprised in the bitmap is equal to the number of symbols corresponding to the reference subcarrier spacing and comprised in the periodic time window, the reference subcarrier spacing is equal to a subcarrier spacing of an uplink BWP or a downlink BWP, or the reference subcarrier spacing is equal to the subcarrier spacing adopted by the slot format configuration. As one subsidiary embodiment of the above embodiment, the number of the bits comprised in the bitmap is equal to a positive integer multiple of the number of symbols comprised in the periodic time window and indicated as downlink symbols or flexible symbols by "tdd-UL-DL-ConfigCommon" or "tdd-UL-DL-ConfigDedicated". As one subsidiary embodiment of the above embodiment, the first information block is used for indicating at least 1 symbol per SCS from the periodic time window.

As one embodiment, the technical feature "the first information block indicates a symbol type of at least 1 symbol from the periodic time window" comprises the following meaning: the first information block comprises one bitmap, any bit in the bitmap corresponds to one symbol in the periodic time window, the symbol in the periodic time window corresponding to the bit with the bit value equal to "0" in the bitmap is a symbol of the first type, and the symbol in the periodic time window corresponding to the bit with the bit value equal to "1" in the bitmap is a symbol of a type other than the first type. As one subsidiary embodiment of the above embodiment, a link direction of the symbol in the periodic time window corresponding to the bit with the bit value equal to "1" in the bitmap is provided by "tdd-UL-DL-ConfigCommon" or "tdd-UL-DL-ConfigDedicated". As one subsidiary embodiment of the above embodiment, the symbol in the periodic time window corresponding to the bit with the bit value equal to "1" in the bitmap is a downlink symbol or a flexible symbol. As one subsidiary embodiment of the above embodiment, any bit in the bitmap corresponds to a symbol in the periodic time window, that is indicated as a downlink symbol or a flexible symbol by "tdd-UL-DL-ConfigCommon" or "tdd-UL-DL-ConfigDedicated". As one subsidiary embodiment of the above embodiment, the number of bits comprised in the bitmap is equal to the number of symbols comprised in the periodic time window. As one subsidiary embodiment of the above embodiment, the number of the bits comprised in the bitmap is equal to the number of symbols corresponding to the reference subcarrier spacing and comprised in the periodic time window, the reference subcarrier spacing is equal to the subcarrier spacing of the uplink BWP or the downlink BWP, or the reference subcarrier spacing is equal to the subcarrier spacing adopted by the slot format configuration. As one subsidiary embodiment of the above embodiment, the number of the bits comprised in the bitmap is equal to a positive integer multiple of the number of symbols comprised in the periodic time window and indicated as downlink symbols or flexible symbols by "tdd-UL-DL-ConfigCommon" or "tdd-UL-DL-ConfigDedicated". As one subsidiary embodiment of the above embodiment, the first information block is used for indicating at least 1 symbol per SCS from the periodic time window.

As one embodiment, the TDD uplink/downlink configuration is used for determining the slot format configuration period length.

As one embodiment, signaling other than the TDD uplink/downlink configuration is used for determining the slot format configuration period length.

As one embodiment, the slot format configuration period length is a period length of the TDD uplink/downlink configuration.

As one embodiment, the slot format configuration period length is a slot configuration period length.

As one embodiment, the slot format configuration period length is a DL-UL-Transmission Periodicity.

As one embodiment, the slot format configuration period length is a period length in which a pattern for configuring a slot format is periodically applied.

As one embodiment, the slot format configuration period length is equal to a slot configuration period length provided by a pattern 1.

As one embodiment, the slot format configuration period length is equal to a slot configuration period length provided by a pattern 2.

As one embodiment, the slot format configuration period length is equal to a sum of the slot configuration period length provided by the pattern 1 and a slot configuration period length provided by the pattern 2.

As one embodiment, the slot format configuration period length is equal to one DL-UL-Transmission Periodicity.

As one embodiment, the slot format configuration period length is equal to a sum of two independent DL-UL-Transmission Periodicities.

As one embodiment, the technical feature "a time length of the periodic time window is related to a slot format configuration period length" comprises the following meaning: the time length of the periodic time window is equal to the slot format configuration period length.

As one embodiment, the technical feature "a time length of the periodic time window is related to a slot format configuration period length" comprises the following meaning: the slot format configuration period length is used for determining the time length of the periodic time window.

As one embodiment, the technical feature "a time length of the periodic time window is related to a slot format configuration period length" comprises the following meaning: the time length of the periodic time window is equal to the slot format configuration period length of a positive integer multiple greater than 1.

As one embodiment, the technical feature "a time length of the periodic time window is related to a slot format configuration period length" comprises the following meaning: the time length of the periodic time window is equal to a sum of the slot format configuration period length provided by the pattern 1 and the slot format configuration period length provided by the pattern 2.

As one embodiment, the technical feature "a time length of the periodic time window is related to a slot format configuration period length" comprises the following meaning: the time length of the periodic time window is equal to a positive integer multiple of a sum of the slot format configuration period length provided by the pattern 1 and the slot format configuration period length provided by the pattern 2.

As one embodiment, the technical feature "a time length of the periodic time window is related to a slot format configuration period length" comprises the following meaning: the time length of the periodic time window is equal to a positive integer multiple of the slot format configuration period length, and the multiple of the slot format configuration period length that the time length of the periodic time window is equal to depends on a second information block.

As one embodiment, the technical feature "a time length of the periodic time window is related to a slot format configuration period length" comprises the following meaning: the time length of the periodic time window is equal to a positive integer multiple of the slot format configuration period length, and the multiple of the slot format configuration period length that the time length of the periodic time window is equal to is related to a subcarrier spacing.

As one embodiment, the technical feature "a time length of the periodic time window is related to a slot format configuration period length" comprises the following meaning: the time length of the periodic time window is linearly correlated to the slot format configuration period length.

As one embodiment, the technical feature "a time length of the periodic time window is related to the slot format configuration period length" comprises the following meaning: the time length of the periodic time window is linearly proportionally correlated to the slot format configuration period length.

As one embodiment, a symbol of the first type is an SBFD symbol.

As one embodiment, the symbol of the first type is a time domain symbol configured with SBFD.

As one embodiment, the symbol of the first type is a symbol in an SBFD slot.

As one embodiment, the symbol of the first type is a symbol in a slot configured with SBFD.

As one embodiment, whether one symbol is a symbol of the first type is configured.

As one embodiment, any symbol of the first type is an OFDM symbol.

As one embodiment, the symbol of the first type is a time domain symbol configured with the first subband.

As one embodiment, the symbol of the first type is a time domain symbol comprised in a slot configured with the first subband.

As one embodiment, the symbol of the first type is a symbol applicable to SBFD indicated by the first information.

As one embodiment, the symbol of the first type is a symbol supporting full duplex or flexible duplex and indicated by the first information.

As one embodiment, the symbol of the first type is a symbol applicable to a subband indicated by the first information.

As one embodiment, the symbol of the first type is a symbol corresponding to the bit with the bit value equal to "1" in the bitmap comprised in the first information. As one subsidiary embodiment of the above embodiment, indicating a symbol of the first type through the bitmap maximizes configuration flexibility.

As one embodiment, the symbol of the first type is a symbol corresponding to the bit with the bit value equal to "0" in the bitmap comprised in the first information. As one subsidiary embodiment of the above embodiment, indicating a symbol of the first type through the bitmap maximizes configuration flexibility.

As one embodiment, the symbol of the first type is a symbol that can be simultaneously used for uplink transmission and downlink transmission.

As one embodiment, the symbol of the first type is a symbol that can be simultaneously used by a base station or a network device for uplink transmission and downlink transmission.

As one embodiment, the symbol of the first type is a time domain symbol indicated as a downlink by "tdd-UL-DL-ConfigCommon" and indicated (or provided) by the first information block.

As one embodiment, the symbol of the first type is a time domain symbol indicated as a downlink by "tdd-UL-DL-ConfigCommon" and indicated as an SBFD symbol by the first information block.

As one embodiment, the symbol of the first type is a time domain symbol indicated as a downlink or flexible by "tdd-UL-DL-ConfigCommon" and indicated (or provided) by the first information block.

As one embodiment, the symbol of the first type is a time domain symbol indicated as a downlink or flexible by "tdd-UL-DL-ConfigCommon" and indicated as an SBFD symbol by the first information block.

As one embodiment, only considering "tdd-UL-DL-ConfigCommon" simplifies a design and reduces standardization workload.

As one embodiment, the symbol of the first type is a time domain symbol indicated as a downlink by "tdd-UL-DL-ConfigDedicated" and indicated (or provided) by the first information block.

As one embodiment, the symbol of the first type is a time domain symbol indicated as a downlink by "tdd-UL-DL-ConfigDedicated" and indicated as an SBFD symbol by the first information block.

As one embodiment, the symbol of the first type is a time domain symbol indicated as a downlink or flexible by "tdd-UL-DL-ConfigDedicated" and indicated (or provided) by the first information block.

As one embodiment, the symbol of the first type is a time domain symbol indicated as a downlink or flexible by "tdd-UL-DL-ConfigDedicated" and indicated as an SBFD symbol by the first information block.

As one embodiment, the symbol of the first type is a time domain symbol indicated as a downlink by "tdd-UL-DL-ConfigCommon" or "tdd-UL-DL-ConfigDedicated" and indicated (or provided) by the first information block.

As one embodiment, the symbol of the first type is a time domain symbol indicated as a downlink by "tdd-UL-DL-ConfigCommon" or "tdd-UL-DL-ConfigDedicated" and indicated as an SBFD symbol by the first information block.

As one embodiment, the symbol of the first type is a time domain symbol indicated as a downlink or flexible by "tdd-UL-DL-ConfigCommon" or "tdd-UL-DL-ConfigDedicated" and indicated (or provided) by the first information block.

As one embodiment, the symbol of the first type is a time domain symbols indicated as a downlink or flexible by "tdd-UL-DL-ConfigCommon" or "tdd-UL-DL-ConfigDedicated" and indicated as an SBFD symbol by the first information block.

As one embodiment, considering both "tdd-UL-DL-ConfigCommon" and "tdd-UL-DL-ConfigDedicated" maximizes reuse of an existing design and ensures compatibility.

As one embodiment, considering both downlink symbols and flexible symbols expands configuration flexibility.

As one embodiment, only considering downlink symbols simplifies a system design.

As one embodiment, the technical feature "a symbol indicated as a downlink by the TDD uplink/downlink configuration and overlapping with a symbol of the first type is a used for uplink transmission in the first subband" comprises the following meaning: at least 1 symbol indicated as the downlink by the TDD uplink/downlink configuration and overlapping with the symbol of the first type can (or may or is allowed to or configured to) be used for uplink transmission in the first subband.

As one embodiment, the technical feature "a symbol indicated as a downlink by the TDD uplink/downlink configuration and overlapping with a symbol of the first type is a used for uplink transmission in the first subband" comprises the following meaning: when 1 symbol indicated as the downlink by the TDD uplink/downlink configuration is a symbol of the first type or overlaps with at least 1 symbol of the first type, the 1 symbol indicated as the downlink by the TDD uplink/downlink configuration can (or may or is allowed to or configured to) be used for uplink transmission in the first subband.

As one embodiment, the technical feature "a symbol indicated as a downlink by the TDD uplink/downlink configuration and overlapping with a symbol of the first type is a used for uplink transmission in the first subband" comprises the following meaning: the symbol of the first type comprises a symbol indicated as the downlink symbol by the TDD uplink/downlink configuration and also indicated as an SBFD symbol by the first information block.

As one embodiment, the technical feature "a symbol indicated as a downlink by the TDD uplink/downlink configuration and overlapping with a symbol of the first type is a used for uplink transmission in the first subband" comprises the following meaning: the symbol of the first type comprises a symbol indicated as the downlink symbol by the TDD uplink/downlink configuration and also indicated as an uplink symbol by the first information block.

As one embodiment, the technical feature "a symbol indicated as a downlink by the TDD uplink/downlink configuration and overlapping with a symbol of the first type is a used for uplink transmission in the first subband" comprises the following meaning: the symbol indicated as the downlink by the TDD uplink/downlink configuration and simultaneously indicated by the first information block can (or may or is allowed to or configured to) be used for uplink transmission in the first subband.

As one embodiment, the technical feature "a symbol indicated as a downlink by the TDD uplink/downlink configuration and overlapping with a symbol of the first type is a used for uplink transmission in the first subband" comprises the following meaning: the symbol indicated as the downlink by the TDD uplink/downlink configuration and simultaneously indicated as the symbol of the first type by the first information block can (or may or is allowed to or configured to) be used for uplink transmission in the first subband.

As one embodiment, the technical feature "a symbol indicated as a downlink by the TDD uplink/downlink configuration and overlapping with a symbol of the first type is a used for uplink transmission in the first subband" comprises the following meaning: user equipment considers that at least 1 symbol indicated as the downlink by the TDD uplink/downlink configuration and overlapping with the symbol of the first type is available for transmission in the first subband.

As one embodiment, the technical feature "a symbol indicated as a downlink by the TDD uplink/downlink configuration and overlapping with a symbol of the first type is a used for uplink transmission in the first subband" comprises the following meaning: if a DCI format or an RAR (random access response) uplink grant (UL grant) or a fallback RAR uplink grant or a success RAR is received, in at least 1 symbol indicated as the downlink by the TDD uplink/downlink configuration and overlapping with the symbol of the first type, user equipment correspondingly sends a PUSCH (physical uplink shared channel), a PUCCH (physical uplink control channel), a PRACH (physical random access channel) or an SRS (sounding reference signal) in the first subband.

As one embodiment, the technical feature "a symbol indicated as a downlink by the TDD uplink/downlink configuration and overlapping with a symbol of the first type is a used for uplink transmission in the first subband" comprises the following meaning: if the DCI format or the RAR uplink grant or the fallback RAR uplink grant or the success RAR is received, in at least 1 symbol indicated as the downlink by the TDD uplink/downlink configuration and overlapping with the symbol of the first type and in the first subband, user equipment correspondingly sends a PUSCH, a PUCCH, a PRACH or an SRS.

As one embodiment, the technical feature "a symbol indicated as a downlink by the TDD uplink/downlink configuration and overlapping with a symbol of the first type is a used for uplink transmission in the first subband" comprises the following meaning: if the DCI format or the RAR uplink grant or the fallback RAR uplink grant or the success RAR is received, in at least 1 symbol indicated as the downlink by the TDD uplink/downlink configuration and overlapping with the symbol of the first type, and in the first subband, user equipment correspondingly sends a PUSCH, a PUCCH or an SRS.

As one embodiment, the technical feature "a symbol indicated as a downlink by the TDD uplink/downlink configuration and overlapping with a symbol of the first type is a used for uplink transmission in the first subband" comprises the following meaning: if the DCI format is received, in at least 1 symbol indicated as the downlink by the TDD uplink/downlink configuration and overlapping with the symbol of the first type, and in the first subband, user equipment correspondingly sends a PUSCH, a PUCCH, a PRACH or an SRS.

As one embodiment, the technical feature "a symbol indicated as a downlink by the TDD uplink/downlink configuration and overlapping with a symbol of the first type is a used for uplink transmission in the first subband" comprises the following meaning: if the DCI format is received, in at least 1 symbol indicated as the downlink by the TDD uplink/downlink configuration and overlapping with the symbol of the first type, user equipment correspondingly sends a PUSCH, a PUCCH, a PRACH or an SRS in the first subband.

As one embodiment, the technical feature "a symbol indicated as a downlink by the TDD uplink/downlink configuration and overlapping with a symbol of the first type is a used for uplink transmission in the first subband" comprises the following meaning: if the DCI format is received, in at least 1 symbol indicated as the downlink by the TDD uplink/downlink configuration and overlapping with a symbol of the first type, user equipment correspondingly sends a PUSCH, a PUCCH or an SRS in the first subband.

### Embodiment 12

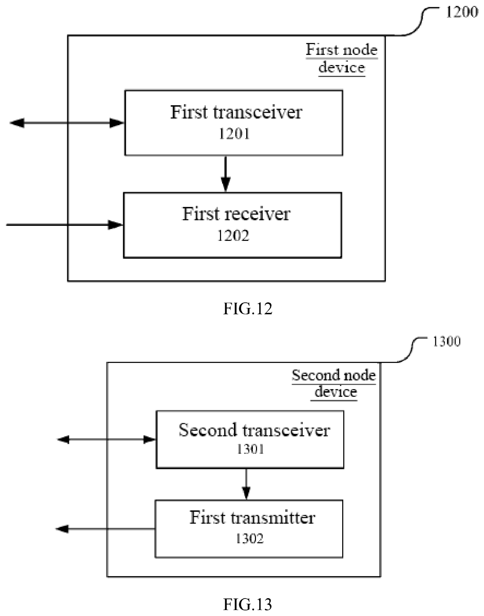

Embodiment 12 illustrates a structural block diagram of a processing apparatus in a first node device of one embodiment, as shown in FIG. 12. In FIG. 12, a processing apparatus 1200 of the first node device comprises a first transceiver 1201 and a first receiver 1202. The first transceiver 1201 comprises a transmitting device/receiving device 456 (comprising an antenna 460), a receiving processor 452, a transmitting processor 455, and a controller/processor 490 in FIG. 4 of the present application; and the first receiver 1202 comprises the transmitting device/receiving device 456 (comprising the antenna 460), the receiving processor 452, and the controller/processor 490 in FIG. 4 of the present application.

In Embodiment 12, the first transceiver 1201 receives a first information block; and the first receiver 1202 receives first DCI signaling and receives a first signal, the first DCI signaling indicating a time-frequency resource occupied by the first signal, wherein a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

As one embodiment, the target control resource set and the first signal belong to a same cell, and the target control resource set is a control resource set with a minimum index value that is monitored in a latest symbol of the same symbol type as at least one time domain symbol occupied in the time domain by the first signal.

As one embodiment, the first signal and a reference signal for a TCI state among a plurality of TCI states of the target control resource set are quasi-co-located, the TCI state being associated with a symbol type of at least one time domain symbol occupied in the time domain by the first signal.

As one embodiment, the first transceiver 1201 sends a second information block, wherein the second information block indicates a first capability parameter value, and the first threshold depends on the first capability parameter value and a target offset value; and the target offset value depends on at least one of the first information block or the second information block.

As one embodiment, an index value of a control resource set pool to which the target control resource set belongs is equal to an index value of a control resource set pool to which a PDCCH carrying the first DCI signaling belongs.

As one embodiment, the first transceiver 1201 receives a third information block, wherein the third information block indicates a same reference signal for quasi-co-location of a demodulation reference signal for a physical downlink shared channel, a demodulation reference signal for a physical downlink control channel, and a channel status information reference signal; and a PCI associated with a TCI state with which the first signal is configured is different from a PCI of a serving cell to which the first signal belongs.

As one embodiment, the first information block indicates a first subband, and the first subband comprises at least one resource block; the first information block indicates a symbol type of at least 1 symbol from a periodic time window, the periodic time window comprises a plurality of consecutive symbols, and a time length of the periodic time window is related to a slot format configuration period length; and a first type is a symbol type of at least 1 symbol indicated by the first information block from the periodic time window, and a symbol indicated as the downlink by the TDD uplink/downlink configuration and overlapping with a symbol of the first type is used for uplink transmission in the first subband.

### Embodiment 13

Embodiment 13 illustrates a structural block diagram of a processing apparatus in a second node device of one embodiment, as shown in FIG. 13. In FIG. 13, a processing apparatus 1300 of the second node device comprises a second transceiver 1301 and a first transmitter 1302. The second transceiver 1301 comprises a transmitting device/receiving device 416 (comprising an antenna 460), a receiving processor 412, a transmitting processor 415, and a controller/processor 440 in FIG. 4 of the present application; and the first transmitter 1302 comprises the transmitting device/receiving device 416 (comprising the antenna 460), a transmitting processor 415 and the controller/processor 440 in FIG. 4 of the present application.

In Embodiment 13, the second transceiver 1301 sends a first information block; and the first transmitter 1302 sends first DCI signaling and sends a first signal, the first DCI signaling indicating a time-frequency resource occupied by the first signal, wherein a time offset value between the first DCI signaling and the first signal in a time domain is smaller than a first threshold, and the first signal and a target control resource set are quasi-co-located; the first threshold depends on the capability of a first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

As one embodiment, the target control resource set and the first signal belong to a same cell, and the target control resource set is a control resource set with a minimum index value that is monitored in a latest symbol of the same symbol type as at least one time domain symbol occupied in the time domain by the first signal.

As one embodiment, the first signal and a reference signal for a TCI state among a plurality of TCI states of the target control resource set are quasi-co-located, the TCI state being associated with a symbol type of at least one time domain symbol occupied in the time domain by the first signal.

As one embodiment, the second transceiver 1301 receives a second information block, wherein the second information block indicates a first capability parameter value, and the first threshold depends on the first capability parameter value and a target offset value; and the target offset value depends on at least one of the first information block or the second information block.

As one embodiment, an index value of a control resource set pool to which the target control resource set belongs is equal to an index value of a control resource set pool to which a PDCCH carrying the first DCI signaling belongs.

As one embodiment, the second transceiver 1301 sends a third information block, wherein the third information block indicates a same reference signal for quasi-co-location of a demodulation reference signal for a physical downlink shared channel, a demodulation reference signal for a physical downlink control channel, and a channel status information reference signal; and a PCI associated with a TCI state with which the first signal is configured is different from a PCI of a serving cell to which the first signal belongs.

As one embodiment, the first information block indicates a first subband, and the first subband comprises at least one resource block; the first information block indicates a symbol type of at least 1 symbol from a periodic time window, the periodic time window comprises a plurality of consecutive symbols, and a time length of the periodic time window is related to a slot format configuration period length; and a first type is a symbol type of at least 1 symbol indicated by the first information block from the periodic time window, and a symbol indicated as the downlink by the TDD uplink/downlink configuration and overlapping with a symbol of the first type is used for uplink transmission in the first subband.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The first node device or the second node device or UE or the terminal in the present application includes but is not limited to mobile phones, tablet computers, notebook computers, network cards, low-power-consumption devices, eMTC devices, NB-IoT devices, vehicle-mounted communication devices, aircrafts, airplanes, drones, remote-controlled airplanes, test apparatuses, test devices, test instruments and other devices. The base station device or base station or network-side device in the present application includes but is not limited to macrocellular base stations, microcellular base stations, femtocells, relay base stations, eNBs, gNBs, transmitter receiver points (TRPs), relay satellites, satellite base stations, air base stations, test apparatuses, test devices, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the preceding description, and all changes within their equivalent meanings and areas are deemed to be comprised therein.

## Claims

1. A first node device for wireless communication, comprising:
a first transceiver receiving a first information block;
and a first receiver receiving first DCI signaling and receiving a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

2. The first node device according to claim 1, wherein the target control resource set and the first signal belong to a same cell, and the target control resource set is a control resource set with a minimum index value that is monitored in a latest symbol of the same symbol type as at least one time domain symbol occupied in the time domain by the first signal.

3. The first node device according to claim 1 or 2, wherein the first signal and a reference signal for a TCI state among a plurality of TCI states of the target control resource set are quasi-co-located, the TCI state being associated with the symbol type of the at least one time domain symbol occupied in the time domain by the first signal.

4. The first node device according to any one of claims 1 to 3, wherein the first transceiver sends a second information block, wherein the second information block indicates a first capability parameter value, and the first threshold depends on the first capability parameter value and a target offset value; and the target offset value depends on at least one of the first information block or the second information block.

5. The first node device according to any one of claims 1 to 4, wherein an index value of a control resource set pool to which the target control resource set belongs is equal to an index value of a control resource set pool to which a PDCCH carrying the first DCI signaling belongs.

6. The first node device according to any one of claims 1 to 5, wherein the first transceiver receives a third information block, wherein the third information block indicates a same reference signal for quasi-co-location of a demodulation reference signal for a physical downlink shared channel, a demodulation reference signal for a physical downlink control channel, and a channel status information reference signal; and a PCI associated with a TCI state with which the first signal is configured is different from a PCI of a serving cell to which the first signal belongs.

7. The first node device according to any one of claims 1 to 6, wherein the first information block indicates a first subband, and the first subband comprises at least one resource block; the first information block indicates a symbol type of at least 1 symbol from a periodic time window, the periodic time window comprises a plurality of consecutive symbols, and a time length of the periodic time window is related to a slot format configuration period length; and a first type is the symbol type of the at least 1 symbol indicated by the first information block from the periodic time window, and a symbol indicated as a downlink by a TDD uplink/downlink configuration and overlapping with a symbol of the first type is used for uplink transmission in the first subband.

8. A second node device for wireless communication, comprising:
a second transceiver sending a first information block;
and a first transmitter sending first DCI signaling and sending a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of a first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

9. A method used in a first node for wireless communication, comprising:
receiving a first information block;
and receiving first DCI signaling and receiving a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of the first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.

10. A method used in a second node for wireless communication, comprising:
sending a first information block;
and sending first DCI signaling and sending a first signal, the first DCI signaling indicating a time-frequency resource occupied by the first signal,
wherein a time offset value between the first DCI signaling and the first signal in a time domain is smaller than a first threshold, and the first signal and a target control resource set are quasi-co-located; the first threshold depends on the capability of a first node device, and a symbol type of at least one symbol occupied in the time domain by a search space associated with the target control resource set is the same as a symbol type of at least one symbol occupied in the time domain by the first signal; and a symbol type of at least 1 symbol indicated as a downlink by a TDD uplink/downlink configuration depends on the first information block.
